# EUROPEAN PATENT SPECIFICATION

(11) **EP 1 917 795 B1**
(45) Date of publication and mention of the grant of the patent: **16.11.2016**
(21) Application number: 06813700.9
(22) Date of filing: 23.08.2006
(51) Int. Cl.: H04M 3/42

(54) **RATE CONTROL AND CONNECTION MANAGEMENT IN COMMUNICATIONS SYSTEMS**
RATENSTEUERUNG UND VERBINDUNGSVERWALTUNG IN KOMMUNIKATIONSSYSTEMEN
COMMANDE DE DEBIT ET GESTION DES CONNEXIONS DANS LES SYSTEMES DE TELECOMMUNICATIONS

(30) Priority: 23.08.2005 US 710998 P; 23.08.2005 US 711051 P; 23.08.2005 US 711053 P
(43) Date of publication of application: 07.05.2008
(73) Proprietor: Cisco Technology, Inc., San Jose, CA 95134 (US)
(72) Inventor: CHATTERJEE, Saurav, San Jose, CA 95113-2281 (US); FULLARTON, Paul, Milpitas, CA 95035 (US); RANA, Hemendra, Milpitas, CA 95035 (US); SCHRAMM, Steven, D., San Jose, CA 95113-2281 (US)
(74) Representative: Kazi, Ilya
(86) International application number: PCT/US2006/033071
(87) International publication number: WO 2007/025042

(56) References cited:
- WO-A1-2005/067274
- US-B2- 6 920 486

## Description

### RELATED APPLICATIONS

This application is a continuation-in-part (CIP) application of United States Patent Application number 10/890,922, filed July 14, 2004, which claims the benefit of United States Patent Application number 60/487,143, filed July 14, 2003.

This application claims the benefit of United States Patent Application number 60/710,998, filed August 23, 2005.

This application claims the benefit of United States Patent Application number 60/711,051, filed August 23, 2005.

This application claims the benefit of United States Patent Application number 60/711,053, filed August 23, 2005.

### TECHNICAL FIELD

The disclosure herein relates generally to communication systems and, in particular, to wireless communication systems.

### BACKGROUND

Mobile communications in today's real-time enterprise can be challenging. The problem is further complicated by changes in the workplace which have led to a more geographically dispersed and highly mobile workforce. In spite of the popularity of electronic mail (email), large numbers of people and employees still depend upon numerous other types of communications to collaborate with colleagues and drive business success. This is especially true for those in sales, service, operations and management roles who rely upon timely access to and coordination with colleagues as well as other employees, customers, partners and suppliers. Thus, communications remain an essential means of conducting business and staying in contact.

As a result of communications being so critical to business today, many professionals and enterprise employees now handle very large numbers of communications each business day. These communications can include disparate types of communications like emails, voicemails, instant messaging to name a few. Managing these large numbers and disparate types of communications consumes large amounts of time during the typical business day. For the growing number of people who spend a significant part of their day away from their offices or in meetings or other events, managing this large number of communications is highly time-consuming, frustrating and inefficient. Consequently, there is a need for communication systems that provide efficient, timely, and proactive real-time management of multiple types of communications.

WO 2005/067274 describes a system for ensuring synchronisation of presence information is established between difference presence services.

### BRIEF DESCRIPTION OF THE DRAWINGS

**Figure 1** **is** a block diagram of an active mobile collaboration (AMC) system, under an embodiment.
**Figure 2** is a block diagram of a communications system that includes an AMC system, under an alternative embodiment.
**Figure 3** is a block diagram of a communications system that includes an AMC system, under another alternative embodiment.
**Figure 4** is a flow diagram of the behavior-based rate control policy, under an embodiment.
**Figure 5** is a flow diagram of the message-based rate control policy, under an embodiment. Figure 6 is a flow diagram of communications rate control, under an embodiment.
**Figure 7** is a block diagram of a contact data structure of the AMC system, under an embodiment. Figure 8 is a flow diagram of connection management, under an embodiment.
**Figure 8** is a flow diagram of connection management, under an embodiment.
**Figure 9** is a block diagram of an AMC system, under an alternative embodiment.
**Figure 10** is a block diagram of an AMC system, under another alternative embodiment.
**Figure 11** is a block diagram of an AMC system, under yet another alternative embodiment.
**Figure 12** is a block diagram of an AMC system in an enterprise domain, under another alternative embodiment.
**Figure 13** is a block diagram of an AMC system in a public domain coupled across components of an enterprise domain, under another alternative embodiment.
**Figure 14** is a block diagram of an AMC system in an enterprise domain, under still another alternative embodiment.
**Figure 15** is a block diagram of an active mobile collaboration (AMC) system, under an embodiment.

### DETAILED DESCRIPTION

Communications rate control is described herein. The rate control includes receiving a message addressed to a client device of a user. A determination is made as to a category of the message. Data of the message is synchronized between a server and the mobile device in response to one or more of the category and one or more user actions at the client device.

In the following description, numerous specific details are introduced to provide a thorough understanding of, and enabling description for, embodiments of the communications systems. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

A communication system is provided herein that uses client-server architectures to improve the efficiency of multiple types of communications. The communication system, referred to herein as the active mobile collaboration (AMC) system, includes a facilitator. The facilitator of an embodiment is an application hosted on one or more servers or other processor-based devices, and communicates a portable or mobile communications device via one or more couplings. The facilitator communicates with the AMC client of a host portable device via a network coupling for example. The facilitator of alternative embodiments can be distributed among one or more portable processor-based devices including the same communication devices as the client application.

The AMC system also includes a client. The client, also referred to as the AMC client, is a component application of a variety of processor-based mobile communication devices and telephones. The components of the AMC system function to improve efficiency of communications by allowing communication device users to increase accessibility of enterprise and personal contact information from mobile phones and other personal digital assistants (PDAs), dynamically manage how and when mobile communications take place, intelligently screen messages, regardless of message type, based on identity of a messaging party, urgency, and subject matter, and determine which contacts in a directory are available to talk and which ones choose not to be disturbed, to name a few.

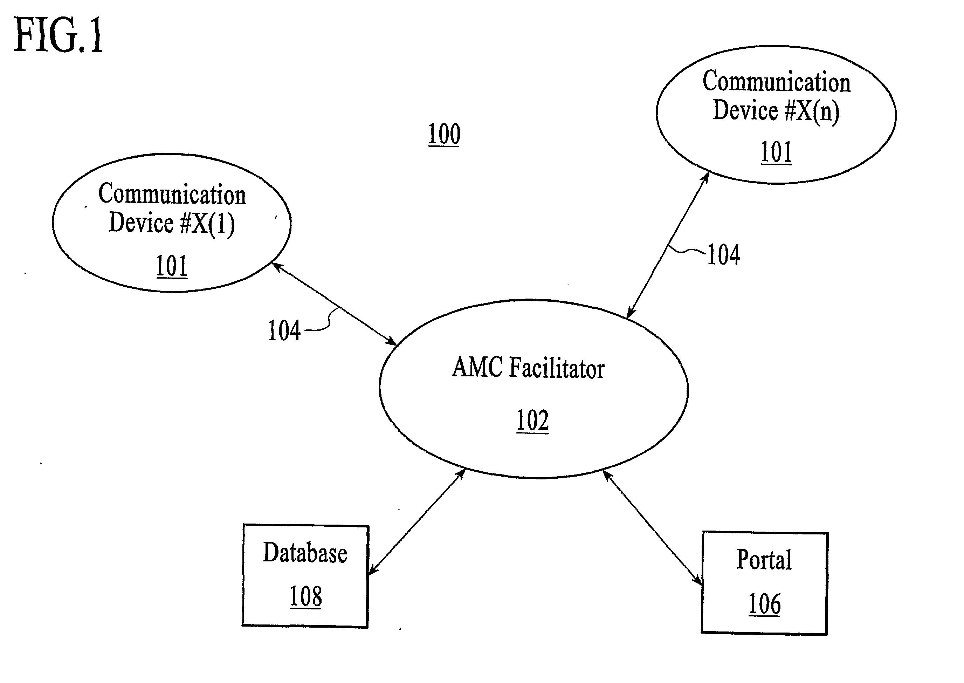

**Figure 1** is a block diagram of an active mobile collaboration (AMC) system 100, under an embodiment. The AMC system 100 includes any number X(n) of communication devices 101 coupled for communication via one or more facilitators 102 and one or more couplings 104. One or more of the communication devices 101 include an AMC client application. Likewise, the facilitator 102, also referred to herein as the AMC server 102, includes a facilitator application. The AMC client and facilitator function to allow users of the communication devices to dynamically manage how and when mobile calls take place, intelligently screen calls based on caller identity, urgency, and subject matter, determine which contacts in a directory are available to talk and which ones choose not to be disturbed, and increase accessibility of enterprise and personal contact information from mobile phones. The AMC system 100 of an embodiment also includes couplings with one or more portals 106 and/or one or more databases 108, but is not so limited.

The communication devices 101 and facilitators 102 described herein are processor-based components running or hosting numerous applications or programs. As such, the communication devices 101 and facilitators 102 can include one or more processors (not shown) coupled among any number/combination of components (not shown) known in the art, for example buses, controllers, memory devices, and data input/output (I/O) devices, in any number of combinations.

The communication devices 101 described herein include processor-based electronic devices, for example, cellular telephones, personal computers, portable computing devices, portable telephones, portable communication devices, subscriber devices or units, PDAs, mobile devices, wireless devices, wireline devices, voice over Internet Protocol (VOIP) devices, private branch exchange (PBX) devices, soft clients, and desktop clients to name a few. The communication devices 101, also referred to as handsets, client devices, mobile devices, mobile communication devices, and portable communication devices, can include all such devices and equivalents, and are not limited to the communication devices described above.

The couplings 104 include wired couplings, wireless couplings, and hybrid wired/wireless couplings, but are not so limited. Furthermore, the couplings 104 can include various networks and/or network components (not shown) of a communication service provider or carrier, but are not so limited. The network and corresponding network components, when present in the couplings 104, can be any of a number of network types known in the art including, but not limited to, local area networks (LANs), metropolitan area networks (MANs), wide area networks (WANs), proprietary networks, backend networks, and the Internet.

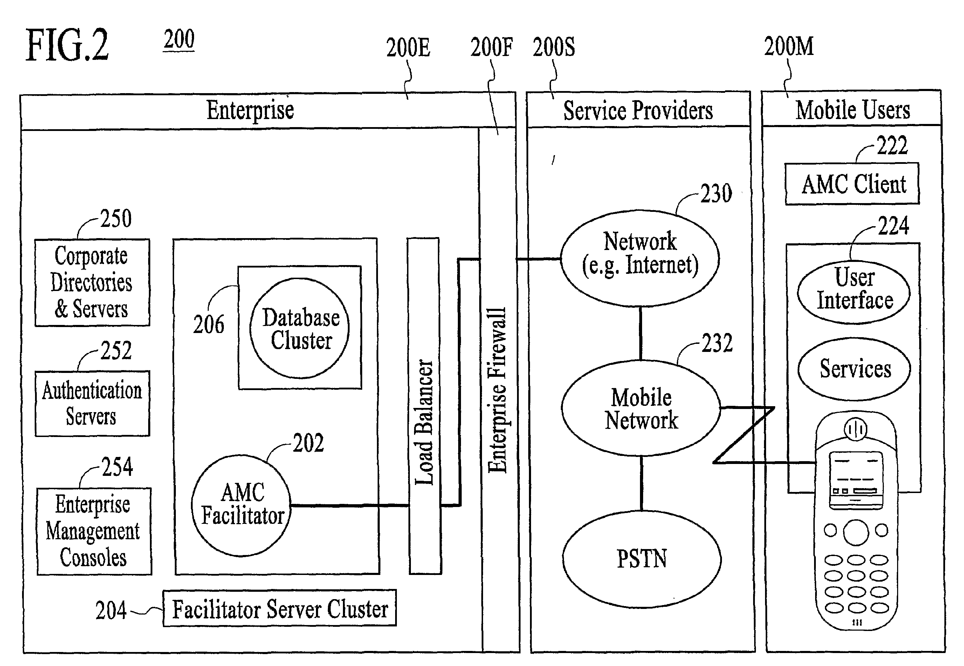

**Figure 2** is a block diagram of a communications system 200 that includes an AMC system, under an alternative embodiment. The AMC system includes a facilitator 202 and a client 222 as described elsewhere herein. The facilitator 202 can be one or more facilitators that form a facilitator server cluster 204 and/or database cluster 206 within the enterprise 200E that are resident behind the enterprise firewall 200F, but the AMC system is not so limited. The host enterprise 200E also includes numerous other components, for example, corporate directories and servers 250, authentication servers 252, and enterprise management consoles 254 to name a few. The facilitator 202 is an integrated component of the host enterprise 200E and as such integrates with one or more components of the enterprise 200E. For example, couplings between the facilitator 202 and messaging and collaboration servers (e.g. Microsoft® Exchange) and/or corporate or other directories of the enterprise 200E allow easy, over-the-air download of personal and corporate contact information to devices, as well as searching of personal and corporate contact directories from the device. Other information of the enterprise 200E can also be delivered to the devices using the AMC system, information including but not limited to calendar information, calendar alerts, calendar reminders, etc.

The facilitator 202 couples to a device of one or more users via one or more network couplings. As an example, the facilitator 202 couples to devices using one or more service provider networks 200S. In this example, the facilitator 202 couples to one or more service provider networks or infrastructures 200S via network couplings 230 (e.g. Internet), and then couples to devices 200M via the respective service provider networks 232. The AMC system protects data transfers between the facilitators 202 and the devices 200M using secure couplings, for example, protected with end-to-end security protocols like Secure Sockets Layer (SSL) or Transport Layer Security TLS cryptographic protocols.

The devices 200M of an embodiment include the AMC client 222. The AMC client 222, also referred to as the client 222, includes a graphical user interface 224 that integrates with the device applications and allows users to receive and scan enterprise information of the enterprise 200E. The enterprise information includes contact information, directory information, alerts that can include calendar reminders, conference notifications and call requests from colleagues, as described herein and in the Related Applications. Call requests include relevant details such as name, urgency, and subject matter to help users move business forward while screening out unwanted interruptions. The client 222 further provides a presence-aware phonebook that lets users find a contact and determine if the contact is available to talk, even before placing a call. The client 222 eliminates the need to manually enter contacts into the host device 200M. Instead, users download personal and/or corporate contact information over-the-air to their devices. The facilitator 202 and client 222 of the AMC system therefore provide automated, two-way synchronization to ensure contacts are backed up and up to date at the enterprise 200E.

An example of the AMC system of an embodiment is available as the Orative Enterprise Software from Orative Corporation of San Jose, California. The facilitator is available as the Orative Enterprise Server (e.g. runs on a standards-based, Java 2, Enterprise Edition (J2EE) platform that operates securely behind the enterprise firewall). The client is available as the Orative Client Software (e.g. runs on a variety of popular mobile devices, and leverages the latest application development environments including Symbian OS, Java and BREW to name a few).

While dynamically managing how and when mobile calls take place and intelligently screening calls based on numerous factors described above, the components of the AMC system also improve efficiency of voice communications by increasing accessibility of enterprise and personal contact information from mobile phones. Components of the AMC system of an embodiment support aggregation and management of contact information from various sources including, but not limited to, directories resident on desktop computers, corporate/enterprise directories, and contact information of the mobile device native phonebook, and provide data coupling between those sources and mobile devices hosting the AMC client. This contact information is managed by providing the user with access via the mobile device to dynamically integrated contacts of a contact list and a number of phonebooks from multiple sources. The dynamic integration of multiple disparate directories provided by the AMC system of an embodiment allows a user to indicate the contacts he/she desires among all directories of a corresponding enterprise server, and then dynamically synchronizes all enterprise directories so as to place the desired information from the directories together into a common AMC phonebook, as described in detail below.

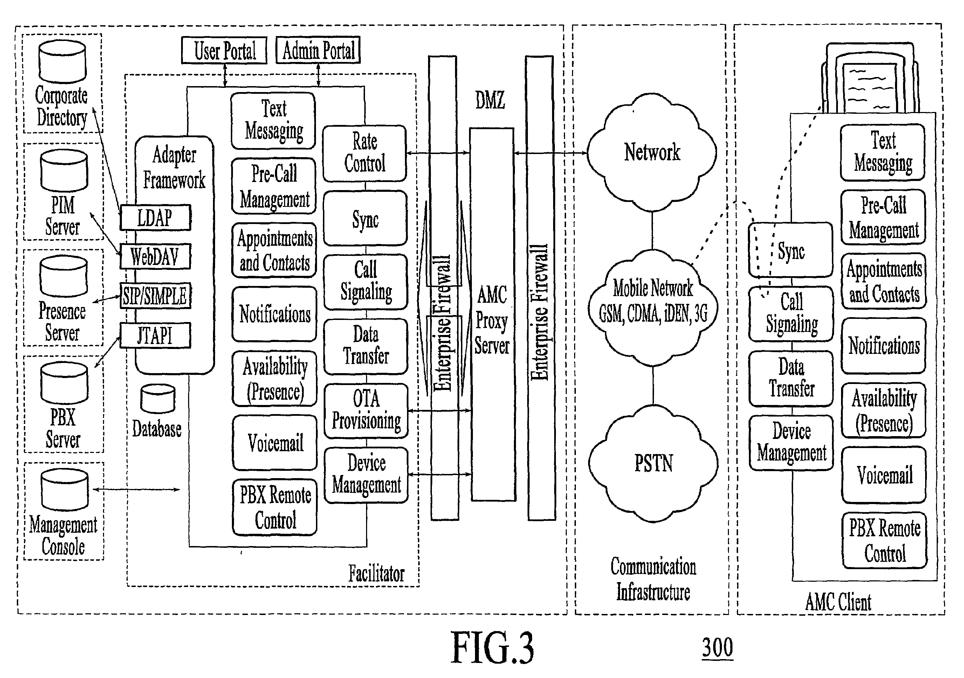

**Figure 3** is a block diagram of a communications system 300 that includes an AMC system, under another alternative embodiment. The communications system 300 includes enterprise components, with which the AMC system is integrated, coupled to client devices via a communication or network infrastructure. The enterprise components include, but are not limited to, one or more of a corporate directory, Personal Information Manager (PIM) server, presence server, Private Branch Exchange (PBX) server, and management console.

The AMC system includes a facilitator as described herein. The facilitator includes an adapter or adapter framework by which the facilitator simultaneously integrates with components of the enterprise and enterprise servers. The facilitator uses an adapter for each directory server to which it integrates. The adapter of an embodiment is a protocol-specific adapter for each directory server to which it integrates; alternatively, the adapter includes vendor-specific adapters. The facilitator integrates with multiple directories simultaneously, including Lightweight Directory Access Protocol (LDAP)/Active Directory, Exchange, Domino, and third-party instant message (IM)/presence server buddy-lists. The AMC adapters convert the data from the enterprise directories (e.g. external) into a common data structure. The converted data is coalesced together into a single directory presented to the user on device via the client. The single directory generated from the data of multiple directories is referred to as the AMC phonebook.

The facilitator includes one or more applications that support multiple functions provided by the AMC system. The AMC system functions include, but are not limited to, test messaging, pre-call management, appointments and contacts, notifications, availability (presence), voicemail, and PBX remote control.

The facilitator couples to a mobile device of one or more users via one or more network couplings or infrastructures. As an example, the facilitator couples to a mobile network using a coupling with another communications network (e.g. Internet). The mobile network or mobile infrastructure, which includes one or more service provider networks associated with respective ones of the mobile devices, provides a coupling to individual mobile devices.

Communications between the facilitator and the mobile device are controlled by the facilitator using one or more components and applications. The functions provided by the facilitator in controlling communications include one or more of rate control, synchronization (sync), call signaling, data transfer, OTA provisioning, and device management to name a few. Optionally, the communications path between the facilitator and the communications network includes an AMC proxy server.

The AMC system of an embodiment includes a protocol for use in managing and synchronizing connections between two endpoints, where the protocol is implemented by the rate controller of the facilitator. The endpoints include any combination of mobile devices including an AMC client and/or facilitators (e.g. two mobile devices, a mobile device and a facilitator, two facilitators, etc.) as described herein. The mobile device and facilitator described above with reference to **Figures 1-3** provide example embodiments of the endpoints, but the endpoints are not so limited. The protocol supports numerous types of data and multiple character sets and languages. Furthermore, the protocol is independent of the transport protocol and runs on top of numerous protocols including HTTP, TCP, UDP, SIP, and WAP, as described above.

The states of the protocol include connection establishment, capability negotiation, login, synchronization (data transfer), logout, and connection tear-down, but are not so limited. In the synchronization state, data transfer occurs between two endpoints subsequent to a synchronization event determined by the rate controller; the previous stages necessary for synchronization also occur before data transfer can begin if these stages have not been completed successfully. The rate controller of an embodiment is a component or application of the facilitator (Figure 3) but is not so limited. A synchronization event occurs when the rate controller determines a set of criteria have been met for a connection to occur. The rate controller therefore controls or limits the number of times the AMC client transfers data to a facilitator, and vice versa, over a wireless network, thus reducing the number of messages transmitted between the endpoints, limiting data charges, and possibly alleviating device battery usage. The rate controller provides control on contacts, notifications, and any type of data between any two endpoints, and especially presence and availability updates, which account for significant data usage and charges and battery life on mobile devices. The rate control criteria can be per user, per device type, and/or per service provider to name a few.

The rate controller intelligently synchronizes traffic or message flow between the facilitator and the mobile device in order to control when data, and what data, is transferred between the enterprise server and the mobile device. The control or synchronization is based on numerous factors that include content type of the message and the context of the device. Furthermore, the rate control or synchronization can be based on factors that include, but are not limited to, user preferences, message subject, message timeout (expiry), availability of message sender and/or recipient, presence of message sender and/or recipient, reachability of message sender and/or recipient, level of user activity, organizational level of message sender and/or recipient, number of message recipients, roles of message recipients, type of message (e.g. broadcast message), number of queued messages, age of messages, date, calendar, time of day, combination of time due and current time, service provider policies, device capabilities and/or limitations, size of message, load on system (e.g., AMC, service provider, enterprise, etc.), customer preference based on service provider service plan (e.g. roaming), desktop activity, and number of contacts.

Communication synchronization based on content of messages in an embodiment uses content of outbound message traffic from the enterprise server to the mobile device, but is not so limited. The context of the mobile device includes information of user activities on the mobile device like, for example, navigation in an application on the mobile device, if the screen light is on, if the screen lid is open, idle time after key press, etc. The rate controller can be used in any network or communication network (e.g. mobile communication networks, satellite communications networks, data networks, etc.) in which there is a need to conserve scarce resources (e.g. expensive, low bandwidth, system capacity, battery, etc.).

In addition to message type and device context, the rate controller of an embodiment, as described below, synchronizes traffic according to different mechanisms based on the type of connection between the mobile device and the enterprise server. The presence information of an embodiment for all other users is organized into four (4) categories or types of presence status. These different types of presence status include watcher, active, standby, and background, as described below. In an embodiment, the presence status used by the rate controller corresponds to the types of phonebooks or phonebook contacts of the AMC system, but an embodiment is not so limited.

The rate controller of an embodiment determines when to synchronize and what to synchronize. The rate controller includes two queues, referred to herein as an allow queue and a block queue. Generally, different policies of the rate controller are defined by specifying which message types get placed in particular queues of the rate controller, where placement in a queue of an embodiment is dynamic. Using an example rate controller policy, the rate controller immediately synchronizes all data of messages placed or included in the allow queue, while messages placed in the block queue are queued up by the rate controller but do not result in immediate initiation of synchronization.

In the rate control policies of an embodiment, system-defined high priority messages are directed or placed in the allow queue. The high priority messages of an embodiment include, for example, text messages, call requests, contact updates, notifications, and call logs, but can include other message types. The generation of high priority messages therefore initiates synchronization because of their placement or assignment to the allow queue.

Messages relating to presence and availability updates, which are the most frequent message type in an embodiment, are placed in different queues at different times according to presence status information. Therefore, for each user X, presence information of an embodiment for all other users is organized into four (4) categories or types of presence status. One presence status is watcher, and watcher status is assigned to other users whose presence status is actively watched by user X. Another presence status is active, and active status is assigned to other users with whom user X recently communicated within a pre-specified and dynamically configured period of time. Another presence status is standby, and standby status is assigned to other users manually included in the AMC phonebook of user X. A further presence status is background, and background status is assigned to all other users with presence information. The presence status can also determine or correspond to a phonebook of the AMC system in which contact information of other users are placed, as described below, but the embodiment is not so limited.

The rate controller is configured to provide different rate control policies based on client platforms, networks, and service providers. As example rate control policies, a user behavior-based control policy is used for persistent connections (e.g. between the server and the client device) and a message-based control policy is used for non-persistent connections; other rate control policies can be used in alternative embodiments. Each of the user behavior-based control policy and the message-based control policy are described in detail below.

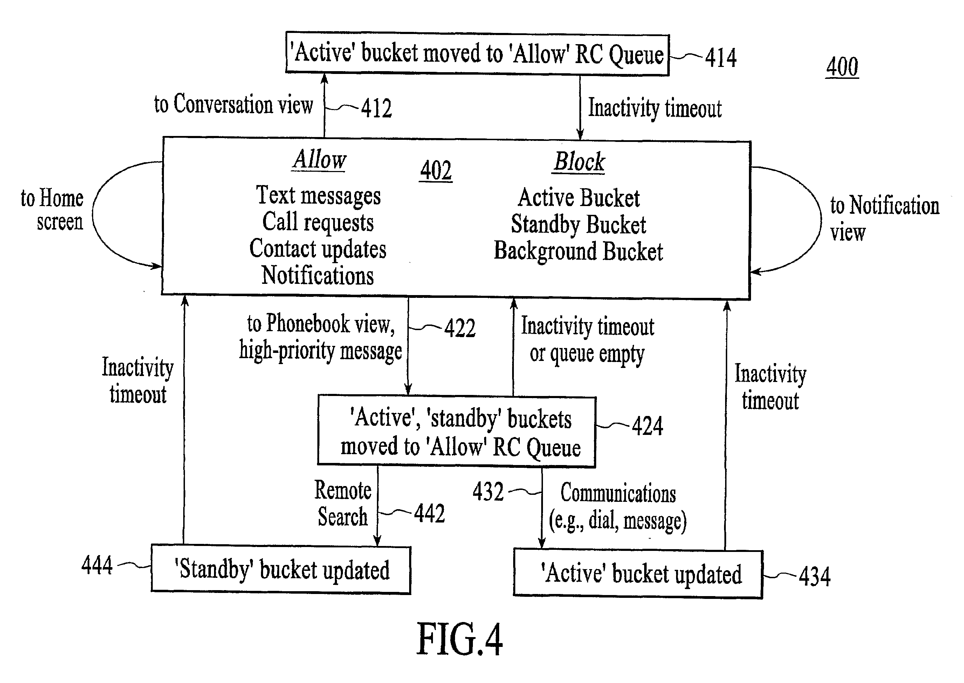

The behavior-based rate control policy is an aggressive presence and availability update limiter that, while maximizing battery life of mobile devices, uses quick interaction between the client of the mobile device and the facilitator. **Figure 4** is a flow diagram of the behavior-based rate control policy 400, under an embodiment. The default state 402 of the behavior-based rate control policy places high priority messages (e.g. text messages, call requests, contact updates, call screen alerts, notifications, call logs, messages of presence of type watcher, etc.) in the allow queue. Messages of other presence status (e.g. active, standby, background) are considered of relatively lower priority and are therefore placed in the block queue. The default state 402 control policy applies when the handset is not being used, and this results in only high priority messages of the allow queue initiating synchronization.

The context of the mobile device includes information of user activities on the mobile device like, for example, navigation in an application on the mobile device, if the screen light is on, if the screen lid is open, idle time after key press, etc. This information is conveyed to the AMC server from the AMC client.

The AMC client comprises three UI screens: a main status screen, where the user may change his/her presence; the conversation screen, where the user may see a log of his/her conversations (be it via text messaging, calls, voice mail, call requests) with other users and these user's presence information; and the phonebook screen, where the user may see a list of his/her corporate and personal contacts and their presence information.

When the user navigates 412 to the "conversation" screen of his/her mobile device, which shows the user's recent communications log (e.g. for calls, text messages, call requests), the AMC client notifies the server of this activity. The server changes to this new state and remains in this state until an inactivity timeout. In this state, all presence status messages having an active status are placed in the active queue. All presence status messages in the block queue having an active status are moved to the active queue. Any message in the active queue initiates synchronization 414.

When the user navigates 422 to the "phonebook" screen of his/her mobile device, the AMC client notifies the server of this activity. The server changes to this new state and remains in this state until an inactivity timeout.. In this state, all presence status messages having an active or standby status are placed in the active queue. All presence status messages in the block queue having an active or standby status are moved to the active queue. The synchronization 424 therefore results in synchronization of presence and availability information for other users having either of active or standby status.

In one variant of this embodiment, operations under the behavior-based rate control policy also include synchronizing 424 presence and availability information for other users having active or standby status in response to generation 422 of a high-priority message. Therefore, when the user receives or generates 422 a high-priority message, the AMC server or client, respectively, simultaneously or subsequently initiates synchronization 424 to the other endpoint. The synchronization 424 initiated as a result of high-priority message generation includes moving the presence status messages from the block queue to the active queue for AMC contacts having either of active or standby status. The generation 422 of high-priority messages therefore initiates synchronization because of their placement or re-assignment to the allow queue.

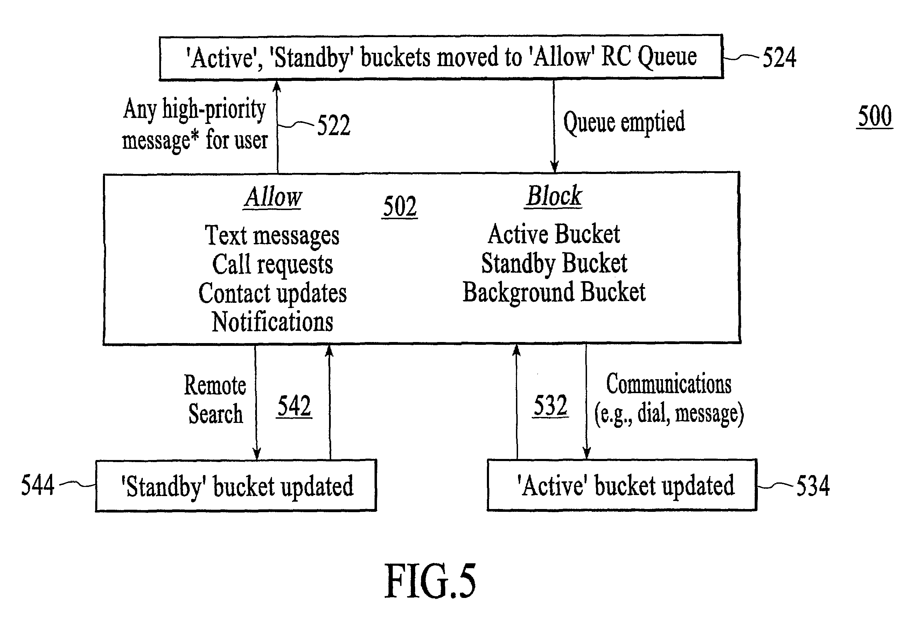

The message-based rate control policy is configured for use on mobile device, for example, mobile devices using BREW or J2ME operating systems. **Figure 5** is a flow diagram of the message-based rate control policy 500, under an embodiment. The default state 502 of the message-based rate control policy places high priority messages (e.g. text messages, call requests, contact updates, notifications, call logs, etc.) in the allow queue. Messages of presence status (e.g. active, standby, background) are considered of relatively lower priority and are therefore placed in the block queue regardless of presence status. The default state 502 control policy applies when the handset is not being used, and this results in only high priority messages of the allow queue initiating synchronization.

Operations under the message-based rate control policy also include synchronizing 524 presence and availability information for other users having active or standby status in response to generation 522 of a high-priority message. Therefore, when the user generates 522 a high-priority message using his/her mobile device, the AMC client simultaneously or subsequently initiates synchronization 524 of the mobile device. The synchronization 524 initiated as a result of high-priority message generation includes moving the presence status messages from the block queue to the active queue for AMC contacts having either of active or standby status. The generation 522 of high-priority messages therefore initiates synchronization because of their placement or re-assignment to the allow queue.

The AMC system of an embodiment updates the presence and availability messages for example during one or more of communication events 532 (e.g., dialing, text messaging) and during remote search 542. In one embodiment, presence and availability messages for contacts having an active status are updated 534 in response to a communications event 532. Furthermore, presence and availability messages for contacts having a standby status are updated 544 in response to a remote search request or action 542. In an alternative embodiment, presence and availability messages for contacts having either active status or standby status are updated 534 and 544 in response to a communications event 532.

While particular behavior-based 402 and message-based 502 rate control policies are described above, these policies are intended only as examples as other rate control policies are contemplated under the disclosure herein. Rate control policies of alternative embodiments, therefore, can be configured for use in various types of communications systems (e.g. cellular, WiFi, etc.) and/or under multiple protocols.

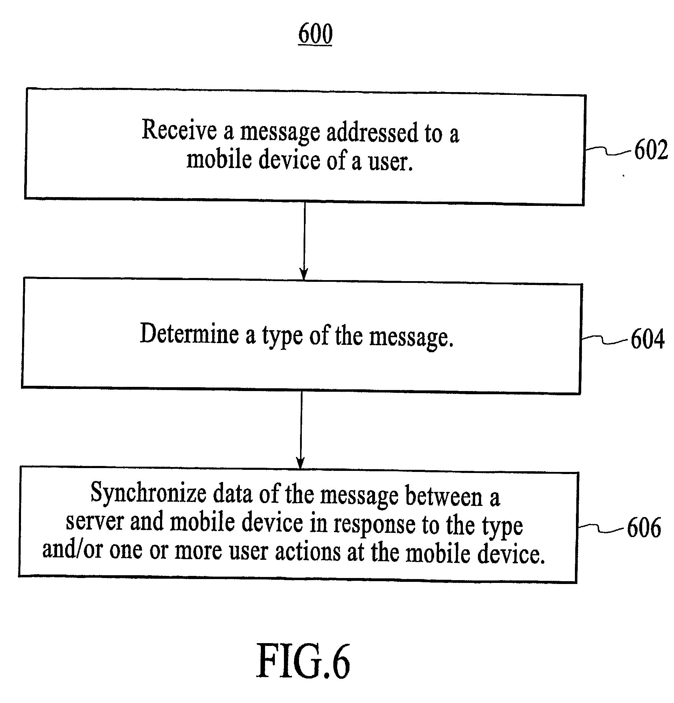

As a more general example, **Figure 6** is a flow diagram of communications rate control 600, under an embodiment. The rate control 600 includes receiving 602 a message addressed to a mobile device of a user. A determination 604 is made as to a type of the message. Data of the message is synchronized 606 between a server and the mobile device in response to one or more of the type and one or more user actions at the mobile device.

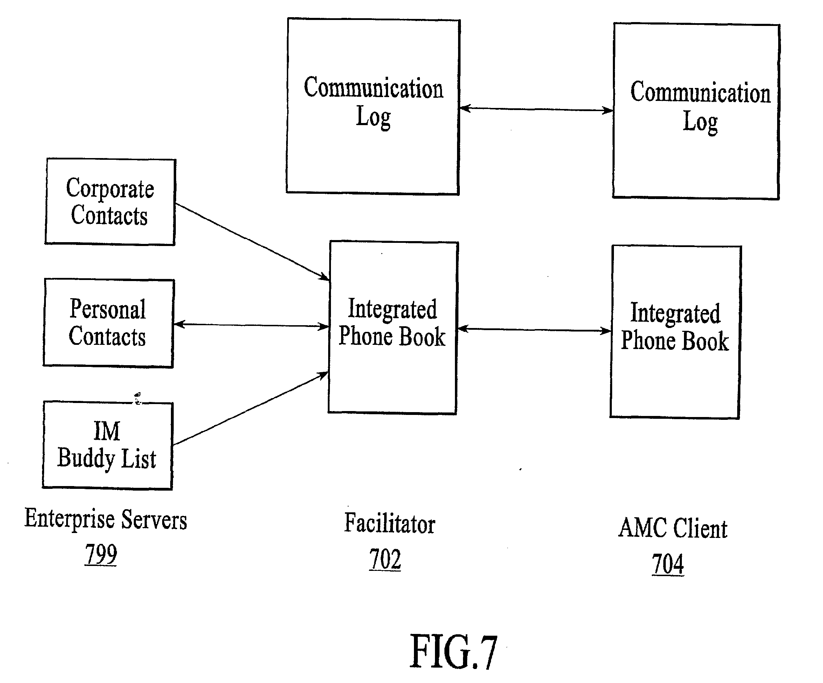

The AMC system described above integrates contacts and contact information from multiple directories or contact lists. **Figure 7** is a block diagram of a contact data structure of the AMC system, under an embodiment. The data structure includes a communications log and an integrated phonebook on the facilitator 702 (e.g. appointments and contacts module of the facilitator (Figure 3)) for each user. The integrated phonebook of the facilitator 702 receives or exchanges information with directories of one or more enterprise servers 799 for that user, the directories including corporate contacts, personal contacts, and instant messaging (IM) buddy lists, for example.

The client 704 also includes a communications log and an integrated phonebook, each of which are coupled to the respective data structures of the facilitator. The contact information of the integrated phonebook is stored in an application and/or memory area of the client device that includes the native phonebook of the client device, but can be stored in other memory areas of/available to the client device. Addition, modification, and/or deletion of contacts in the integrated phonebook reflect in the native phonebook of the client device, but are not so limited. Likewise, addition, modification, and/or deletion of contacts in the native phonebook of the client device are reflected in the integrated phonebook, but are not so limited.

The integrated phonebook of an embodiment includes a collection of contact objects, each of which represents a contact, whether one or more of corporate, personal and/or buddy list. The contacts in the integrated phonebook are a subset of contacts found in the enterprise servers. The integrated phonebook is specific to each user but is not so limited. The contacts in the integrated phonebook are selected manually, for example, by the user via one or more of the client and a user portal of the facilitator 702. Contacts are thus moved in and out of the integrated phonebook manually by the user through use of the user portal and/or from the client device (via remote search and add to phonebook; or delete from phonebook). Contacts with additional AMC context information may be indicated with an icon contact (e.g., availability, accessible communication modes), but are not so limited.

Contacts are added and removed from the communications log by the AMC system based on activity, including call requests, text messages, emails, voicemails, incoming phone calls, and/or outgoing phone calls. The communications log includes contacts are displayed chronologically, then alphabetically by name, in the communications log along with an icon that shows the AMC context information for the contact (e.g., availability, accessible communication modes), but is not so limited.

Both the communications log and the integrated phonebook provide the ability to view (and modify in case of the integrated phonebook) contacts as well as to select one or more contacts from the contact list and then select desired AMC calling or communications features for the selected contacts. Both provide graphical indications of the availability state (i.e., contextual cues) of each AMC contact as defined by the currently active availability profile of that contact. The AMC system updates the context data in the communications log when any subscriber represented in the lists change his availability or presence state, where the updates of an embodiment occur the next time the AMC client 404 and facilitator 402 communicate following the change in availability or presence state.

As a general example of integration of contacts from disparate directories into a common directory, a directory is formed comprising contact information from disparate directories. The forming includes receiving contacts from multiple directories. The contacts represent or are formed under multiple data structures, with one data structure corresponding to one of the directories. The received contacts are converted into contact objects. The contact objects, each of which represents a contact, all include or are formed under a common data structure. An integrated directory is generated or formed from the contact objects. The integrated directory thus includes a set of contacts of the disparate source directories.

With reference to Figure 3, the facilitator of an embodiment uses the synchronization protocol (sync) to synchronize the integrated phonebook on the facilitator with the integrated phonebook on one or more clients on which the user logs in to the system. The adapters use different protocols to fetch contacts from applications of the enterprise servers and convert the contacts into contact objects; for example, LDAP is used to fetch contacts from Microsoft Active Directory, Web-based Distributed Authoring and Versioning (WebDAV) is used to fetch contacts from Microsoft Exchange, and SIP/SIMPLE is used to fetch contacts from instant message (IM) buddy lists. The facilitator of an alternative embodiment can include other adapters as appropriate to a configuration of the host enterprise server. An embodiment tracks only contacts in the AMC phonebook but is not so limited. Non-AMC contacts in the third-party directory servers are outside the purview of the AMC system and are therefore referred to as "background" contacts.

New contacts can be added to the entries in the integrated phonebook. The addition of the new contacts includes referencing existing contacts in one or more of the enterprise servers. The addition of contacts can also include adding one or more new personal contacts from the client, where the new contacts from the client are then stored in the personal contacts server as a new personal contact.

In addition to the contacts, presence and availability information is added to the directory for all users in these directories who are also AMC users. Presence and availability information can be referenced from an external presence server and/or generated and maintained internally within the facilitator. Presence and availability information can be transmitted for contacts in both the communications log and the integrated phonebook, because there may be overlap between communication log and integrated phonebook contacts, presence and availability for each contact should be transmitted only once). The facilitator of an alternative embodiment transmits presence and availability information relating only to contacts in the communications log; this significantly reduces the number of presence updates and aids in scalability, without significantly sacrificing user needs for presence and availability updates.

The AMC system communication log and integrated phonebook can be viewed as layers but is not so limited. The rate controller of the facilitator uses the layered phonebook concept to intelligently transfer data between the facilitator and the client. In addition to the integrated phonebook, the communications log comprises contacts of others with whom the user has recently communicated. The contacts of the communications log can overlap with contacts in one or more of the integrated phonebook, the enterprise directories, and background contacts, but may also include contacts that are not in any directory.

The layered directory provides, on phones with limited memory and relatively lower network bandwidth for example, efficient use of available memory and bandwidth through manual selection of a subset of contacts to synchronize from the server to the client devices. Further, regarding presence and availability updates for contacts, the layered directory allows the facilitator to update presence and availability information for a pre-specified contact type (e.g. contacts in the communication log) independent of contact in other directory lists, thereby providing for significantly reduced network traffic between the server and the client and also between servers (e.g., in a cluster). This structured updating of presence and availability updates therefore functions according to a temporal locality principle under which contacts with whom the user has recently communicated are most probably the ones whose availability and presence would be important to the user at any given time.

The communications log configuration can be augmented to include static and dynamic entries. Static entries are manually designated by the user and remain in the communications log even if there has not been communication with that contact for some period of time, while dynamic entries would be added and dropped by the system based on communication patterns. The communication pattern algorithm of an embodiment is based not only on recent communications but also on the history and/or type of communications (e.g., if a contact appears and drops from the communications log sporadically, the system may decide to simply keep the contact in the phonebook for longer durations).

The dynamic integration of multiple disparate directories provided by the AMC system of an embodiment dynamically synchronizes all enterprise directories so as to place or integrate contact information designated by a user from the disparate directories together into a common AMC phonebook. Following formation of the "common" directory of desired contact information from subsets of data from the enterprise directories, the AMC system of an embodiment allows user searching of the common directory. Thus, the AMC system provides for searching of multiple directories with one common input.

The searching provide by the AMC system includes remote searching and local searching. Local searching is performed against the local integrated phonebook on a client device. In contrast, remote searching is performed against one or more directories of the enterprise server (e.g. corporate directory, etc.). The local directory on the client device therefore effectively functions like a cache of information of one or more of the directories of the enterprise server, where the cache is stored locally on the client device, as described below.

The dynamic aggregation and management of contact information from multiple disparate sources provides client device users with access to accurate real-time contact information at their devices without the need for manually loading the information into the native phonebook of the client device. As an example, with reference to **Figures 1-3****,** corporate/enterprise directory information is pushed to the facilitator, but the AMC system of alternative embodiments may receive the corporate/enterprise directory information via any number of methods known in the art. Due to limited processing resources on the client devices, however, not all contact data may be stored on the client devices. The AMC system provides convenient search and retrieve features from the client device to facilitate easy lookup of personal or corporate directory information, as described below.

Access to the aggregated contact information by a user of the AMC system is supported by the AMC client via search queries directed at all directory information to which the AMC system has access. The search queries are based on various combinations of name, including last name, first name, and partial name. Alternatively, rather than supplying the first few letters of the name into a field for a name-based search, the user may access an alphabetical display that accesses records corresponding with the first letter of the first or last name. Other search criteria or attributes of a contact or user upon which searching and sorting can be based in an embodiment, include but are not limited to presence, availability, location, email, phone number, network identification, title, profession company, department, location/facility, region, group affiliation (i.e. information assigned by a system administrator such as West Coast Sales Team, Account Team, Escalation Support Team, etc.), mailing list of which contact is a member, supervisor name, assistant, instant messaging address, children, spouse, notes, category, last active date, and other miscellaneous fields or information. This information can assist in the search for the appropriate contact, but completion of the fields is optional for any given search.

Search queries of an embodiment can include information in addition to or as a substitution of a contact name; for example, relational information that links to the contacts can be searched or returned in the search results. The relational data is tied to one or more of the identity, location, and/or other criteria of the contact. The relational data includes static information such as cities or location codes. The relational data also includes dynamic information such as the weather, stock information for the company associated with a contact, most recent order items of the contact, etc.

Upon completion of a search, components of the AMC system coalesces and then forward the results of the search to the user's client device for display, where the AMC system responds with search results that approximate the initial query as best as possible. Along with user name, other relevant details/cues are provided with each record to assist the user in identifying the appropriate contact. Examples of this include, but are not limited to, phone number, department, city/facility, and/or group affiliation. Preferences for this additional information are configured using the portal, described above. When a search results in multiple names fitting the search criteria, then the user has the ability to scroll and select the correct entry using the navigation keys. Additional contextual information, such as presence and available, from additional directories may be combined into the results.

The portal (Figure 3) of an embodiment includes a browser-based search interface for use by the user when logged in to the portal during configuration and maintenance. The portal also supports easy selection of contacts from both personal phonebooks and corporate phonebooks to make these contacts available via the client device. The portal also allows the user to designate contacts from both personal phonebooks and corporate phonebooks as communications log entries that may appear in a priority order on the phone contact list.

Components of the AMC system support integration with numerous personal contact managers, for example Microsoft Outlook, Lotus Notes, and ACT to name a few. From a client device perspective, an end user has access to personal contact information (e.g., client device phonebook entries, desktop contact list in Outlook, etc.) as well as corporate contact information. The user can manage all of these contact databases as separate phonebooks rather than attempt to integrate them into one database.

The AMC system of an embodiment supports user-initiated information transfers (uploads and downloads) between contact managers and the facilitator. Further, the AMC system of an embodiment supports user-initiated information transfers (uploads and downloads) between the AMC client and the facilitator. The facilitator resolves duplicates and any discrepancies when new contacts are input to the facilitator from either a personal contact manager or the AMC client.

The AMC system of an embodiment further supports user creation, modification, and deletion of AMC subscriber groups (or consolidated contacts) as a permission-based feature via the portal, but is not so limited. Therefore, any user with permission can create groups. An individual creating a group in an embodiment is considered the sole owner of the group and the only person able to modify the group, but the embodiment is not so limited. The group owner as well as a system administrator can delete groups. Groups are viewed using either of the portal or a client device that includes an AMC client. Subscribers can upload group definitions to AMC client devices for use in communications logs and the general contact list, just like ordinary contacts.

Regarding a search algorithm of the AMC system of an embodiment, a user selects a name according to a [last first] format, and the search algorithm simultaneously or subsequently returns any user matching the input substring. The results are sorted in the following manner: names for which a substring of n characters matches exactly the FIRST n characters of the LAST name (the variable n represents a number 1, 2, ...); names for which a substring of n characters matches exactly the FIRST n characters of the FIRST name; and, all other substring matches in alphabetical order by last name.

For example, if a user searches for "er", the return order of names resulting from the search is as follows:
Erlanger, Buffy
Ermine, Foxy
Schwartz, Ernestine
Bistro, Bernie
Ferguson, Frumpy
Mercury, Freddy

This example search provides one desired return order (Buffy and Foxy first, then Ernestine), and also allows the user two taps to type "mp" to immediately select "Frumpy."

Remote search can be configured to exclude contacts already in the integrated directory from being displayed in the results. Since remote search is typically used when a contact cannot be found in the integrated phonebook, this provides a useful filtering for most users. Further, the search result for one's own contact is also typically filtered out of the result, to again reduce clutter that are of less importance to the user.

The AMC system can choose to limit the number of search results returned to the client device based on user preference, AMC system settings and parameters, and/or based on characteristics of the enterprise directories being searched. When searching enterprise directories that limit search results or do not provide sorting controls that satisfy the sorting requirements of an embodiment, the AMC system can issue multiple related queries against the directory in order to return the most relevant set of limited results. In the embodiment described above, where results are sorted first by names that start with a particular substring, followed by names that include the substring, when searching a particular enterprise directory that limits results and does not provide for sorting control, the AMC can determine that a single search does not provide the most relevant set of limited results. For example, if a user searches for "e" in last name, and an enterprise directory returns at most five (5) results and sorts alphabetically, the returned names may be as follows:
Almaden, Frank
Alberts, Christine
Budke, Phil
Erlanger, Buffy
Ermine, Foxy

The AMC system of an embodiment can determine that there are additional results that start with "e" and should be returned before some of the other results in the above list. In this example the AMC system can then issue a second query for only those names that start with "e" and properly combine and sort the results from both queries before aggregating, sorting, and limiting the results from all directories searched.

Using a search algorithm of the AMC system of another embodiment, a user selects a name a name according to a [first last] format, and the search algorithm simultaneously or subsequently returns any user matching the input substring. The results are sorted in the following manner: names for which a substring of n characters matches exactly the FIRST n characters of the FIRST name; names for which a substring of n characters matches exactly the FIRST n characters of the LAST name; and, all other substring matches in alphabetical order by first name.

For example, if a user searches for "er", the return order of names resulting from the search is as follows:
Ernestine Schwartz
Buffy Erlanger
Foxy Ermine
Bernie Bistro
Freddy Mercury
Frumpy Ferguson

The search algorithms described above can be implemented both in the local search on the client device, remote search via the client device, and portal searches. However, there is a slight difference between the local search and the server searches (remote and portal) in that the server searches provide separate search criteria for first name and last name. Given the difference between local and server search criteria, the following adjustments are made to the search algorithm described above for server searches.

For server searches, using the first example described above (e.g., search a name according to a [last first] format), if a user searches for "er" in the last name, the return order of names resulting from the search is as follows:
Erlanger, Buffy
Ermine, Foxy
Ferguson, Frumpy
Mercury, Freddy

Using the second example described above (e.g., search a name according to a [first last] format), if a user searches for "er" in the first name, the return order of names resulting from the search is as follows:
Schwartz, Ernestine
Bistro, Bernie

If a user enters a query that searches for "er" in both names, no names are returned as none of the names have "er" in both the first and last name. Further, when a user searches for "e" in both names, the return would be "Mercury, Freddy."

The AMC system manages multiple connection types to optimize connections with devices in response to communication carrier capabilities or characteristics (e.g. communication across disparate networks, connectivity charges, etc.). The AMC connection management thus allows for optimization of the communication paradigm while taking into account characteristics and limitations of communication systems like bandwidth, connection stability and reliability, connectivity pricing plans (some plans charge for staying connected so the user does not want to stay connected any more than necessary), and device limitations (e.g. device power consumption is greater during periods of connection with the host network). In so doing, a connection management component of the AMC system monitors the level of network connectedness or connection state (e.g., reachable, not reachable) for each client device hosted by the network. In contrast to a user's availability, as described below, the contextual data relating to connection state or reachable state is largely out of the user's control. Users are "reachable" if their mobile phone is turned on and they have a consistent and reliable connection to the mobile data network (e.g., GPRS). In contrast, users are "not reachable" if they are disconnected from the mobile data network, engaged in a voice call, or have their client device in the off state. A highly mobile person (e.g., driving) will most likely have an erratic reachable state. The reachable state takes precedence over availability so that, at any given time, subscribers may be reachable or not, regardless of their availability state.

In addition to connection state, components of the AMC system use availability data (e.g. willingness to communicate) to manage the message flow between callers. Therefore, the AMC system of an embodiment facilitates communication between parties through the exchange of contextual data that gives would be callers (call originators) important cues as to the appropriateness of their conversation to the receiver's (call recipient's) current situation, as described herein and in the Related Application. Components of the AMC system monitor the availability state of each user or subscriber (where the user has a handset hosting the AMC client) and broadcast that state to interested parties or "watchers". In addition the AMC system introduces an Active Call Request that allows a caller to politely ask a receiver if the receiver is ready to take a phone call, and provides discreet response options by which the receiver can provide timely feedback to the caller. Callers have the satisfaction of knowing the receiver acknowledged their call request and will make time to talk.

Contextual availability management empowers users with greater granularity and control over their ability and willingness to communicate from their handset throughout the workday. Users control their availability state from their handsets through selection of an availability profile, where users tailor the availability profiles to suit their personal needs and tastes. Users are encouraged to change their profile whenever their ability to receive and process communications changes, such as entering and leaving a meeting. Availability profiles are controlled manually via direct user action, for example, as well as automatically via predetermined rules selected by the user and/or information of the user's calendar.

The combination of connectedness or connection management (reachable state) and availability determines how the AMC system manages call requests and directs notifications to the user. The AMC system always knows the availability state of each user by virtue of their selected handset profile and the call screening filters they have active. Mobile phones and the programming environments they support do not always know when the mobile data network is reachable. The AMC system typically will not know the reachable state of a user until it tries to contact them over the mobile data network.

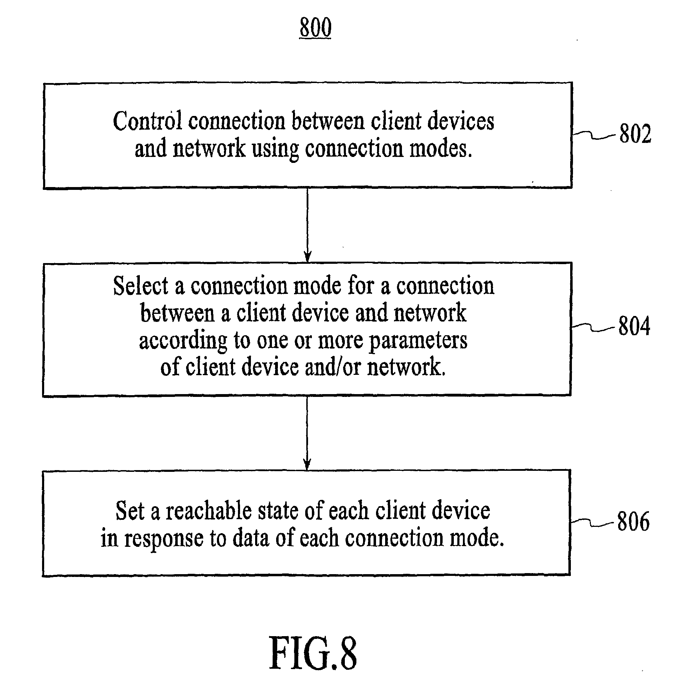

**Figure 8** is a flow diagram of connection management 800, under an embodiment. The connection management includes controlling 802 a connection between client devices and a network using multiple connection modes. One of the available connection modes is selected 804 for use in a connection between the network and a respective client device. Selection 804 of the connection mode is performed according to one or more parameters of the network and the particular client device. A reachable state or presence state of each client device is set 806 in response to data of the respective connection mode.

The connection management component of the AMC system determines the reachable state of a user based on the known connection mode for the AMC client of the client device. The AMC system of an embodiment characterizes reachability according to one of three possible connection modes or states, with each connection state having corresponding methods for inferring the reachable state. The connection modes of an embodiment include but are not limited to SMS wakeup, polling, and persistent connection modes, each of which is described below.

When a client device is operating in the SMS wakeup mode, the facilitator attempts to send an application-directed message (e.g. SMS) to the client device. The AMC client, upon receiving the application-directed message from the facilitator, attempts communication or connection with the facilitator by sending information including the session identification (e.g. sessionId) of the client. The facilitator monitors elapsed time beginning with first transmission of the application-directed message. If the facilitator fails to receive a message or communication from the client device within a pre-specified period of elapsed time (e.g. 30 minutes, one (1) hour, etc.), the facilitator determines the client cannot or will not connect and sets the connection status as "unreachable". Alternative embodiments of the SMS wakeup connection mode can use any period of elapsed time. The connection status remains as "logged out" until such time as the client device connects with the facilitator.

When a client device is operating in the polling mode the facilitator tracks elapsed time since the client device last connected and synchronized with the facilitator. Once the elapsed time since the last connection exceeds a pre-specified amount of time (e.g. one hour) or a multiple of the polling period (e.g., 1 ½ times the polling period), the facilitator determines the client cannot or will not connect and sets the connection status as "logged out". Alternative embodiments of the polling mode can use any period of elapsed time. The connection status remains as "unreachable" until such time as the client device connects with the facilitator.

When a client device is operating in the persistent connection mode the facilitator notes or logs any disconnection event by the client device and tracks elapsed time since the disconnection event. Once the elapsed time since the disconnection event reaches a pre-specified amount of time (e.g. one hour) without the client device attempting to reconnect with the facilitator, the facilitator determines the client cannot or will not connect and sets the connection status as "unreachable". Alternative embodiments of the persistent connection mode can use any period of elapsed time and are not limited to one hour.

Additionally, when the status is 'unreachable', the facilitator changes the availability of the user to indicate the user is unavailable. The connection status remains as "unreachable" until such time as the client device connects with the facilitator, at which time the status is reset to 'reachable'.

The connection management component therefore uses automatic logout to manage the connection between the facilitator and client device in each of the SMS wakeup, polling, and persistent connection modes as described above.

A user can be logged out of the AMC system of an embodiment. When the user logs out, the facilitator notifies all watchers of the user that this user is not available, ceases calendar-induced profile changes, and ceases polling of the PIM adapters. When the user subsequently logs in to the AMC system, the facilitator notifies all watchers of the user and publishes the availability of the user immediately prior to the most recent log off event, initiates calendar-induced profile changes (if applicable), and initiates polling of the PIM adapter.

The circumstances under which the AMC client and facilitator experience a logout event and communicate with each other using LOGOUT messages include, but are not limited to, forced logout, maintenance logout, melting of the device, and closing of the AMC application. Each of these logout scenarios is described in turn below.

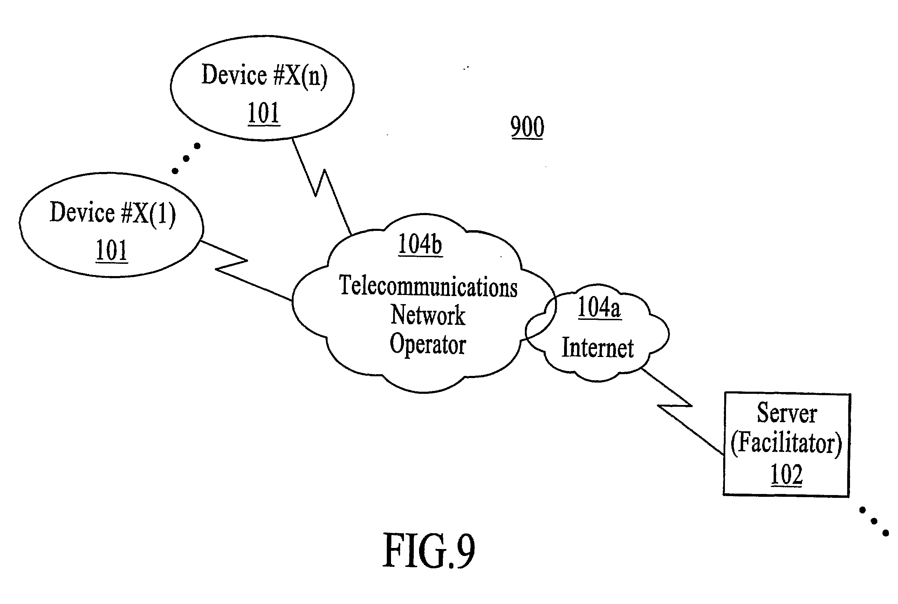

Some examples follow of alternative AMC system configurations that include the facilitator and client described above. **Figure 9** is a block diagram of an AMC system 900, under an alternative embodiment. The AMC system 900 includes a server or other processor-based device hosting the facilitator 102. The facilitator 102 communicates with one or more client devices 101 to provide AMC system functions among the client devices 101 via network couplings that include the Internet 104a and a telecommunications network 104b. The telecommunications network 104b includes, for example, a cellular telephone network or a public switched telephone network (PTSN), but can be other voice and data communication networks as known in the art. The cellular telephone network can use communication protocols that include, for example, Global System for Mobile communication (GSM), General Packet Radio Service (GPRS), Code Division Multiple Access (CDMA), and Time Division Multiple Access (TDMA), but are not so limited.

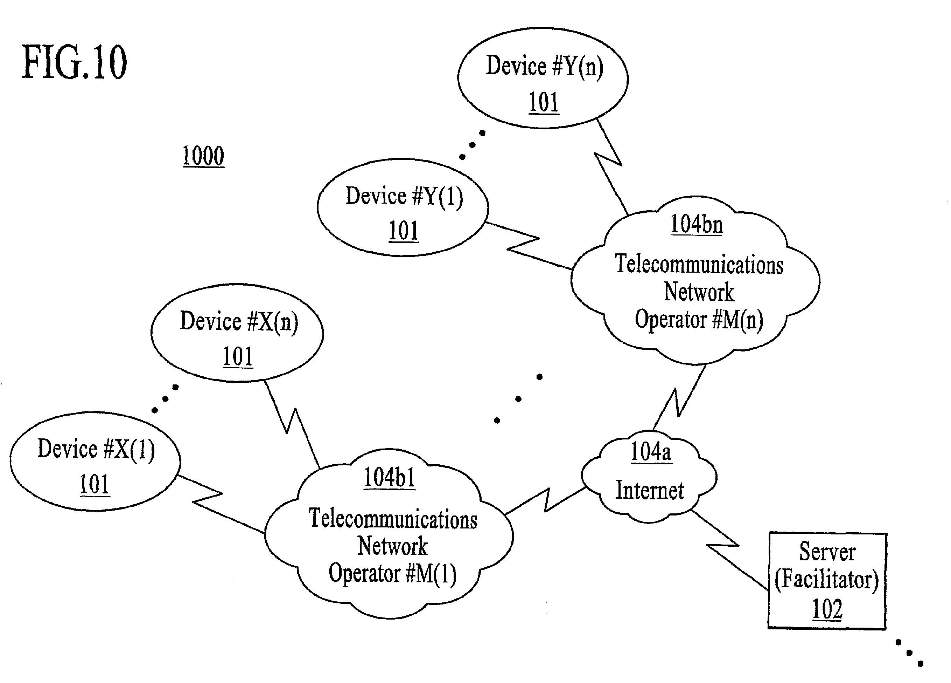

**Figure 10** is a block diagram of an AMC system 1000, under another alternative embodiment. The AMC system 1000 includes a server hosting the facilitator 102, and the facilitator 102 communicates with one or more client devices 101 to provide AMC system functions among the client devices 101 via network couplings that include the Internet 104a and/or multiple telecommunications networks 104b1 to 104bn. The telecommunications networks 104b1-104bn are as described above with reference to **Figure 9****,** but are not so limited.

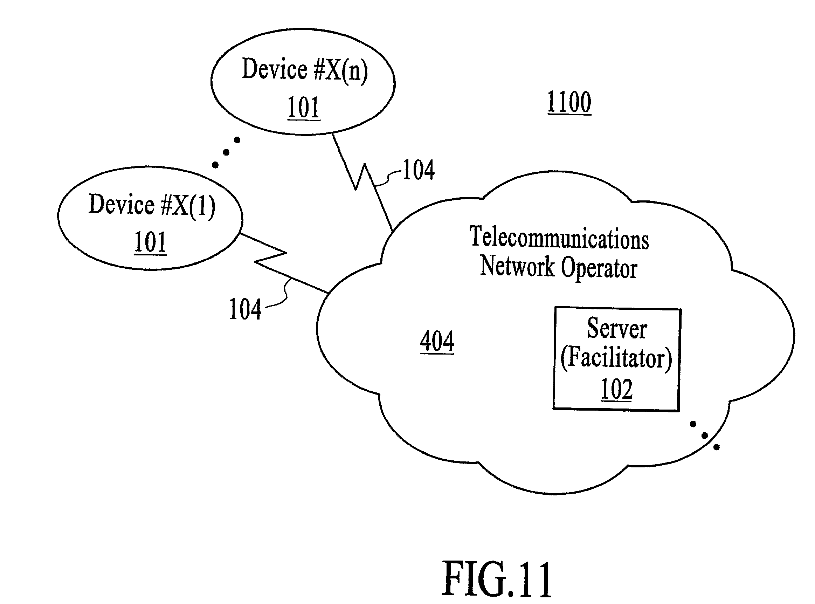

**Figure 11** is a block diagram of an AMC system 1100, under yet another alternative embodiment. The AMC system 1100 includes a server hosting the facilitator 102, and the server/facilitator 102 is a component of a telecommunications network operator infrastructure. The facilitator 102 communicates with one or more client devices 101 to provide AMC system functions among the client devices 101 via network couplings 104, as described above, but is not so limited.

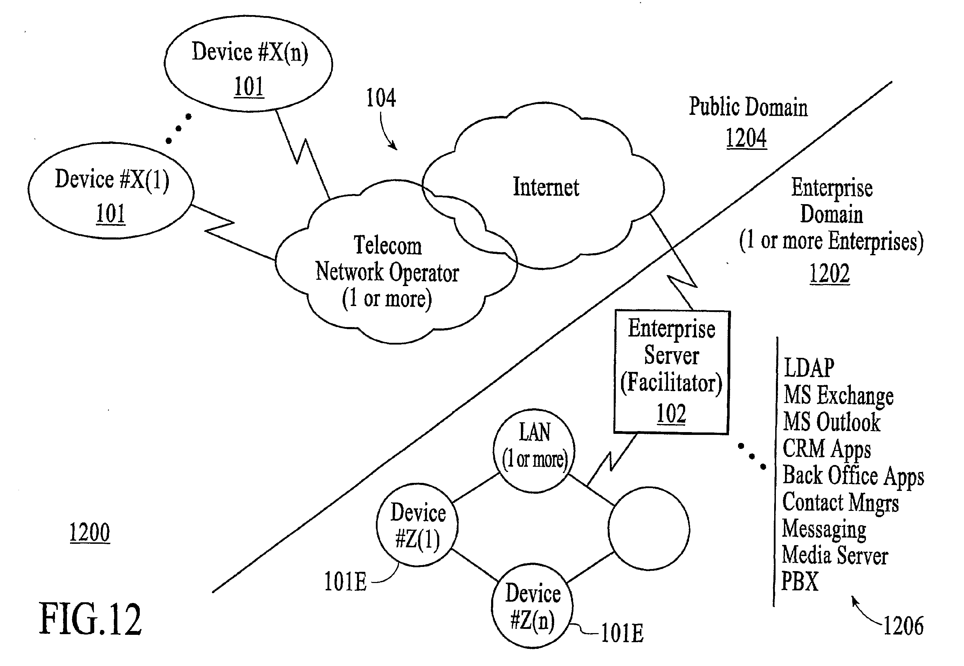

**Figure 12** is a block diagram of an AMC system 1200 in an enterprise domain, under another alternative embodiment. The AMC system 1200 includes a server hosting the facilitator 102 where the server/facilitator 102 is a component of a corporate or enterprise infrastructure 1102. The server can host numerous additional applications 1206 in addition to the facilitator 102 or can be dedicated to the facilitator 102. The facilitator 102 communicates with one or more client devices 101 in the public domain 1204 to provide AMC system functions among the client devices 101 via network couplings 104. The network couplings 104 include, for example, the Internet and one or more telecommunication service provider infrastructures, but can include any number/type of couplings. The facilitator 102 also communicates with one or more client devices 101E in the enterprise domain 1102 to provide AMC system functions among the client devices 101E as described below. The client devices 101E in the enterprise domain 1102 are shown coupled to one or more LANs, but are not so limited.

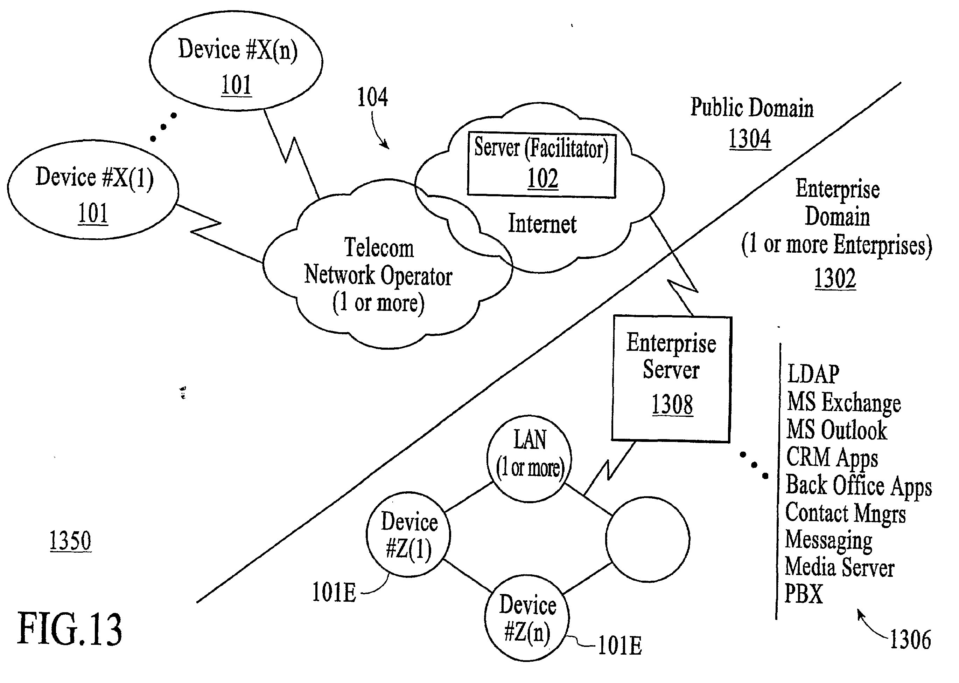

**Figure 13** is a block diagram of an AMC system 1350 in a public domain coupled across components of an enterprise domain, under another alternative embodiment. The AMC system 1350 includes a server hosting the facilitator 102 where the server/facilitator 102 is a component of a carrier or service provider infrastructure or hosted data center infrastructure for example, but is not so limited. The facilitator 102 communicates with one or more client devices 101 in the public domain 1304 to provide AMC system functions among the client devices 101 via network couplings 104. The network couplings 104 include, for example, the Internet and one or more telecommunication service provider infrastructures, but can include any number/type of couplings. The facilitator 102 also communicates with components of the enterprise domain 1302 including, for example, one or more client devices 101E, one or more enterprise servers 1308, and one or more LANs. The facilitator 102 provides AMC system functions among the client devices 101E as described below. The client devices 101E in the enterprise domain 1302 are shown coupled to one or more LANs, but are not so limited.

As an alternative to the couplings of this AMC system, the facilitator can be hosted on one or more servers (not shown) of the telecommunications network operator. The facilitator of the telecommunications network operator couples to the enterprise servers via local contact servers (not shown) and/or Virtual Private Network (VPN) couplings, but is not so limited.

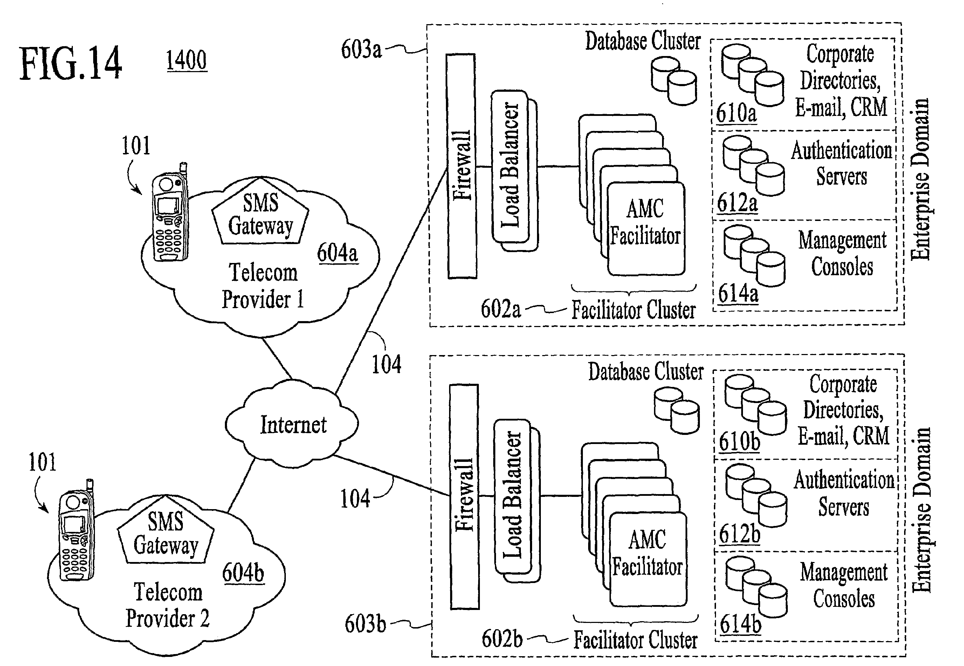

**Figure 14** is a block diagram of an AMC system 1400 in an enterprise domain, under still another alternative embodiment. The AMC system 1400 includes one or more facilitators that form facilitator clusters 602a and 602b within each of a number of enterprise domains 603a and 603b. Facilitators of the facilitator clusters 602a and 602b communicate with one or more client devices 101 to provide AMC system functions among the client devices 101 via network couplings 104. The network couplings 104 include, for example, at least one of the Internet and multiple telecommunication service providers 604a and 604b, but can include any number/type of couplings. The facilitators also couple with at least one of corporate directory servers and/or electronic mail (email) servers 610a/610b, authentication servers 612a/612b, and management consoles 614a/614b of the enterprise domains 603a/603b, but are not so limited.

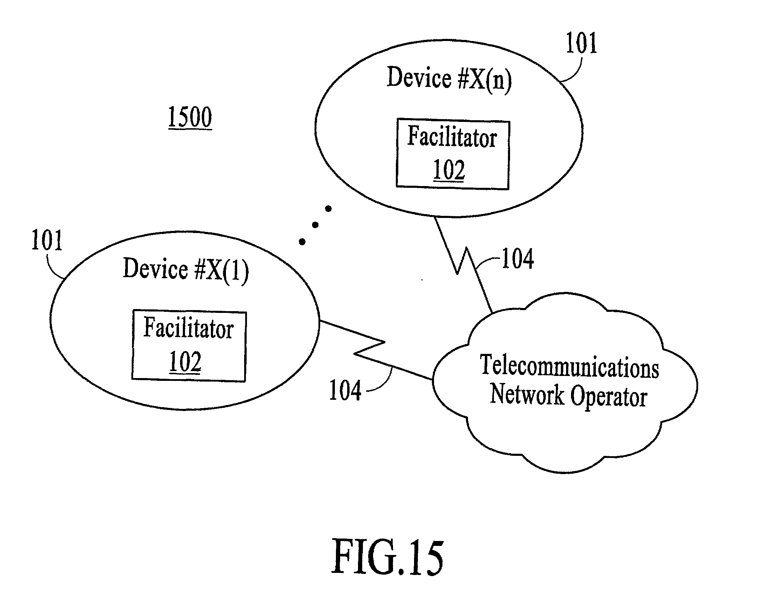

**Figure 15** is a block diagram of an active mobile collaboration (AMC) system 1500, under an embodiment. The AMC system 1500 includes any number X(n) of communication devices 101 coupled for communication via one or more facilitators 102 and one or more couplings 104. One or more of the communication devices 101 include an AMC client application. Additionally, one or more of the communication devices 101 include the facilitator 102. The AMC client applications and facilitator applications function to allow users of the communication devices to dynamically manage how and when mobile calls take place, intelligently screen calls based on caller identity, urgency, and subject matter, determine which contacts in a directory are available to talk and which ones choose not to be disturbed, and increase accessibility of enterprise and personal contact information from mobile phones, as described in detail below.

The AMC system components including the facilitator and AMC client described above function to allow users of the client devices or handsets like cellular telephones to quickly coordinate conversations, screen unwanted calls and interruptions and access enterprise directories. Specifically, the AMC system components increase call success rates by dynamically managing how and when mobile calls take place, let users intelligently screen calls based on caller identity, urgency and subject matter, quickly show which contacts are available to talk and which contacts choose not to be disturbed, reduce interruptions while encouraging urgently needed call-backs, and increase accessibility of enterprise and personal contact information from mobile phones.

The communications systems described herein include a method comprising, receiving a message addressed to a client device of a user, determining a category of the message, and determining information to be synchronized and when to synchronize between a server and the client device in response to one or more of the category and one or more user actions at the client device.

In one embodiment of a method, the synchronizing includes immediately synchronizing in response to the message when the message is a first category.

In one embodiment of a method, the synchronizing includes synchronizing in response to a user action at the client device when the message is a second category.

In one embodiment of a method, the user action includes one or more of generating a message at the client device and navigating a user interface of the client device.

An embodiment of the method further comprises re-categorizing messages of one or more types of the second category in response to a communication event initiated at the client device.

An embodiment of the method further comprises re-categorizing messages of one or more types of the second category in response to a search of data of the server initiated at the client device.

In one embodiment of a method, the synchronizing includes synchronizing messages of the second category in response to an action including navigating to a first portion of a user interface of the client device, wherein the messages of the second category correspond to presence data of other users.

In one embodiment of a method, the messages of the second category correspond to the other users having a first presence status.

In one embodiment of a method, the first portion is a communications log page of the user interface.

In one embodiment of a method, the first presence status is an active status, wherein the active status indicates the client device has communicated with the other user during a pre-specified period of time.

In one embodiment of a method, the synchronizing includes synchronizing messages of the second category in response to an action including navigating to a second portion of a user interface of the client device, wherein the messages of the second category correspond to presence data of other users.

In one embodiment of a method, the messages of the second category correspond to other users having one or more of a first presence status and a second presence status.

In one embodiment of a method, the second portion is a contacts list of the user interface.

In one embodiment of a method, the first presence status is an active status and the second presence status is a standby status, wherein the active status indicates the user has communicated via the client device with the other user during a pre-specified period of time, wherein the standby status indicates the user has communicated via the client device with the other user outside the pre-specified period of time.

In one embodiment of a method, the synchronizing includes synchronizing messages of the second category in response to a generated message of the first category being generated at the client device, wherein the messages of the second category correspond to another user having one or more of a first presence status and a second presence status.

In one embodiment of a method, the first presence status is an active status and the second presence status is a standby status, wherein the active status indicates the client device has communicated with the other user during a pre-specified period of time, wherein the standby status indicates the client device has communicated with the other user outside the pre-specified period of time.

In one embodiment of a method, a first category is a high-priority message and a second category is lower priority message relative to the first category, wherein the priority is assigned by the server.

In one embodiment of a method, a first category is one or more of a text message, a telephone call notification message, a contact update message to update contact information, and a notification message of an event.

In one embodiment of a method, a second category is a presence message, wherein the presence message includes information of presence and availability of at least one other user.

In one embodiment of a method, the presence message includes one or more of a presence message corresponding to another user whom a user of the client device is actively monitoring and a presence message corresponding to another user whom a user of the client device excludes from active monitoring.

In one embodiment, the method further comprises placing the message in a first queue when the message is a first category and placing the message in a second queue when the message is a second category.

In one embodiment of a method, the synchronizing includes immediately synchronizing contents of the first queue in response to the message when the message is the first category.

In one embodiment of a method, the synchronizing includes synchronizing contents of the second queue in response to a user action at the client device when the message is a second category.

In one embodiment of a method, synchronizing contents of the second queue includes, moving one or more messages of the second queue to the first queue according to a presence status of another user that corresponds to the message, and synchronizing contents of the first queue.

In one embodiment of a method, the user action includes navigating to a first portion of a user interface of the client device, wherein the presence status is an active status that indicates the client device has communicated with the other user during a pre-specified period of time.

In one embodiment of a method, the user action includes navigating to a second portion of a user interface of the client device, wherein the presence status includes one or more of an active status and a standby status, wherein the active status indicates the client device has communicated with the other user during a pre-specified period of time and the standby status indicates the client device has communicated with the other user outside the pre-specified period of time.

In one embodiment of a method, the user action includes generating a message of the first category at the client device, wherein the presence status includes an active status and a standby status, wherein the active status indicates the client device has communicated with the other user during a pre-specified period of time and the standby status indicates the client device has communicated with the other user outside the pre-specified period of time.

In one embodiment of a method, the user actions occur before the receiving.

In one embodiment of a method, the user actions occur after the receiving.

In one embodiment of a method, the category includes a plurality of message types.

The communications systems described herein further include a method comprising, receiving a message addressed to a client device of a user, and automatically synchronizing the message with the client device in response to one or more of a category of the message and a connection type of the client device.

The communications systems described herein further include a method comprising, receiving a message addressed to a client device of a user, and automatically synchronizing the message between a server and the client device in response to at least one parameter of one or more of the message, the client device, the server, and a connection between the client device and the server.

The communications systems described herein further include a system comprising a rate controller coupled to at least one server and at least one communication network, the rate controller configured to determine a category of a message, wherein the message is directed to a client device of a user configured for operation on the network, the rate controller configured to synchronize the message between the server and the client device in response to one or more of the category and one or more user actions at the client device.

In an embodiment of a system, the synchronizing includes immediately synchronizing in response to the message when the message is a first category.

In an embodiment of a system, the synchronizing includes synchronizing in response to a user action at the client device when the message is a second category.

In an embodiment of a system, the user action includes one or more of generating a message at the client device and navigating a user interface of the client device.

In an embodiment of a system, the rate controller is configured to re-categorize messages of one or more types of the second category in response to one or more of a communication event initiated at the client device and a search of data of the server initiated at the client device.

In an embodiment of a system, the synchronizing includes synchronizing messages of the second category in response to an action including navigating to a first portion of a user interface of the client device, wherein the messages of the second category correspond to presence data of other users.

In an embodiment of a system, the synchronizing includes synchronizing messages of the second category in response to an action including navigating to a second portion of a user interface of the client device, wherein the messages of the second category correspond to presence data of other users.

In an embodiment of a system, the synchronizing includes synchronizing messages of the second category in response to a generated message of the first category being generated at the client device, wherein the messages of the second category correspond to another user having one or more of a first presence status and a second presence status.

In an embodiment of a system, the rate controller is configured to place the message in a first queue when the message is a first category and placing the message in a second queue when the message is a second category.

In an embodiment of a system, the synchronizing includes immediately synchronizing contents of the first queue in response to the message when the message is the first category.

In an embodiment of a system, the synchronizing includes synchronizing contents of the second queue in response to a user action at the client device when the message is a second category.

In an embodiment of a system, synchronizing contents of the second queue includes, moving one or more messages of the second queue to the first queue according to a presence status of another user that corresponds to the message, and synchronizing contents of the first queue.

In an embodiment of a system, the user action includes navigating to a first portion of a user interface of the client device, wherein the presence status is an active status that indicates the client device has communicated with the other user during a pre-specified period of time.

In an embodiment of a system, the user action includes navigating to a second portion of a user interface of the client device, wherein the presence status includes one or more of an active status and a standby status, wherein the active status indicates the client device has communicated with the other user during a pre-specified period of time and the standby status indicates the client device has communicated with the other user outside the pre-specified period of time.

In an embodiment of a system, the user action includes generating a message of the first category at the client device, wherein the presence status includes an active status and a standby status, wherein the active status indicates the client device has communicated with the other user during a pre-specified period of time and the standby status indicates the client device has communicated with the other user outside the pre-specified period of time.

The communications systems described herein further include a computer readable media including executable instructions which, when executed in a processing system, provides rate control by, receiving a message addressed to a client device of a user, determining a category of the message, and determining information to be synchronized and when to synchronize between a server and the client device in response to one or more of the category and one or more user actions at the client device.

The communications systems described herein include a method comprising, monitoring a connection mode of a client device connected to a server, and setting a reachable state of the client device in response to data of the connection mode.

In an embodiment, the method further comprises selecting one of a plurality of connection modes for the connection between the client device and the server, the selecting according to one or more parameters of at least one of the client device and the server.

In an embodiment of a method, the one or more parameters include one or more of server capability, connection bandwidth, connection stability, connection reliability, service provider, server access pricing plans, device model, and device battery life.

In an embodiment, the method further comprises setting one or more of an availability state and a presence state of a user of the client device according to the reachable state.

In an embodiment of a method, monitoring each connection mode includes tracking elapsed time since a communication event of the connection.

In an embodiment of a method, the communication event includes one or more of a connect event, a disconnect event, a logout event, a login event, an authentication event, and a message transfer between the client device and the server.

In an embodiment of a method, setting the reachable state includes setting the reachable state to unreachable when the elapsed time exceeds a time period in the absence of the communication event.

In an embodiment, the method further comprises setting one or more of an availability state and a presence state of a user of the client device according to the reachable state.

In an embodiment of a method, the plurality of connection modes includes a persistent connection.

In an embodiment of a method, the monitoring includes tracking elapsed time since a communication event of the connection.

In an embodiment of a method, setting the reachable state includes setting the reachable state to unreachable when the elapsed time exceeds a time period in the absence of a connection event.

In an embodiment, the method further comprises setting one or more of an availability state and a presence state of a user of the client device to the unavailable state.

In an embodiment of a method, the plurality of connection modes includes a polling mode.

In an embodiment of a method, the monitoring includes tracking elapsed time since a communication event of the connection.

In an embodiment of a method, setting the reachable state includes setting the reachable state to unreachable when the elapsed time exceeds a time period in the absence of a connection event.

In an embodiment of a method, the plurality of connection modes includes a message wakeup mode, wherein the server sends a wakeup message to the client device.

In an embodiment of a method, the monitoring includes, transmitting an electronic message to the client device, and tracking elapsed time since the transmitting.

In an embodiment of a method, setting the reachable state includes setting the reachable state to unreachable when the elapsed time exceeds a time period in the absence of a connection event with the client device.

In an embodiment of a method, the message is a Short Message Service (SMS) message.

The communications systems described herein further include a method comprising, selecting one of a plurality of connection modes for a connection between a client device and the server according to one or more parameters of at least one of the client device and the server, and setting a reachable state of each client device in response to data of each connection mode.

In an embodiment of a method, the one or more parameters include one or more of server capability, connection bandwidth, connection stability, connection reliability, service provider server access pricing plans, device model, and device battery life.

In an embodiment, the method further comprises setting one or more of an availability state and a presence state of a user of the client device according to the reachable state.

In an embodiment, the method further comprises monitoring each connection mode of each client device connected to the server.

In an embodiment of a method, monitoring each connection mode includes tracking elapsed time since a communication event of the connection.

In an embodiment of a method, the communication event includes one or more of a connect event, a disconnect event, and a message transfer between the client device and the server.

In an embodiment of a method, setting the reachable state includes setting the reachable state to unreachable when the elapsed time exceeds a time period in the absence of the communication event.

The communications systems described herein further include a system comprising, a server, wherein the server is coupled to an enterprise and a communication server that includes a plurality of client devices, and a connection management component coupled to the server and configured to use a plurality of connection modes to control a connection between the server and the plurality of client devices, wherein the connection management component is configured to monitor each connection mode of each client device connected to the server, wherein the connection management component is configured to set a reachable state of each client device in response to data of each respective connection mode.

In an embodiment, of a system, the connection management component is configured to select one of a plurality of connection modes for the connection between the client device and the server, the selecting according to one or more parameters of at least one of the client device and the server.

In an embodiment, of a system, the one or more parameters include one or more of server capability, connection bandwidth, connection stability, connection reliability, service provider, server access pricing plans, device model, and device battery life.

In an embodiment, of a system, the connection management component is configured to set one or more of an availability state and a presence state of a user of the client device according to the reachable state.

In an embodiment, of a system, monitoring each connection mode includes tracking elapsed time since a communication event of the connection.

In an embodiment, of a system, the communication event includes one or more of a connect event, a disconnect event, a logout event, a login event, an authentication event, and a message transfer between the client device and the server.

In an embodiment, of a system, setting the reachable state includes setting the reachable state to unreachable when the elapsed time exceeds a time period in the absence of the communication event.

In an embodiment, of a system, the connection management component is configured to set one or more of an availability state and a presence state of a user of the client device according to the reachable state.

In an embodiment, of a system, the plurality of connection modes includes a persistent connection, wherein the monitoring includes tracking elapsed time since a communication event of the connection, wherein setting the reachable state includes setting the reachable state to unreachable when the elapsed time exceeds a time period in the absence of a connection event.

In an embodiment, of a system, the connection management component is configured to set one or more of an availability state and a presence state of a user of the client device to the unavailable state.

In an embodiment, of a system, the plurality of connection modes includes a polling mode, wherein the monitoring includes tracking elapsed time since a communication event of the connection, wherein setting the reachable state includes setting the reachable state to unreachable when the elapsed time exceeds a time period in the absence of a connection event.

In an embodiment, of a system, the plurality of connection modes includes a message wakeup mode, wherein the server sends a wakeup message to the client device.

In an embodiment, of a system, the monitoring includes, transmitting an electronic message to the client device, and tracking elapsed time since the transmitting.

In an embodiment, of a system, setting the reachable state includes setting the reachable state to unreachable when the elapsed time exceeds a time period in the absence of a connections event with the client device.

The communications systems described herein include a computer readable media including executable instructions which, when executed in a processing system, manages connections in communication systems by, monitoring a connection mode of a client device connected to a server, and setting a reachable state of the client device in response to data of the connection mode.

Aspects of the communications systems described herein may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the communications systems include: microcontrollers with memory (such as electronically erasable programmable read-only memory (EEPROM)), embedded microprocessors, firmware, software, etc. Furthermore, aspects of the communications systems may be embodied in microprocessors having software-based circuit emulation, discrete logic (sequential and combinatorial), custom devices, fuzzy (neural) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

It should be noted that components of the various systems and methods disclosed herein may be described using computer aided design tools and expressed (or represented), as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof.

Examples of transfers of such formatted data and/or instructions by carrier waves include, but are not limited to, transfers (uploads, downloads, e-mail, etc.) over the Internet and/or other computer networks via one or more data transfer protocols (e.g., HTTP, FTP, SMTP, etc.). When received within a computer system via one or more computer-readable media, such data and/or instruction-based expressions of the above described systems and methods may be processed by a processing entity (e.g., one or more processors) within the computer system in conjunction with execution of one or more other computer programs.

Unless the context clearly requires otherwise, throughout the description, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

The above description of embodiments of the communications systems is not intended to be exhaustive or to limit the systems and methods described to the precise form disclosed. While specific embodiments of, and examples for, the communications systems are described herein for illustrative purposes, various equivalent modifications are possible within the scope of other communications systems and methods, as those skilled in the relevant art will recognize. The teachings of the communications systems provided herein can be applied to other processing systems and methods, not only for the systems and methods described above.

The elements and acts of the various embodiments described above can be combined to provide further embodiments. These and other changes can be made to the communications systems in light of the above detailed description.

In general, in the following claims, the terms used should not be construed to limit the communications systems to the specific embodiments disclosed in the specification and the claims, but should be construed to include all systems that operate under the claims. Accordingly, the communications systems is not limited by the disclosure, but instead the scope of the communications systems is to be determined entirely by the claims.

While certain aspects of the communications systems are presented below in certain claim forms, the inventors contemplate the various aspects of the communications systems in any number of claim forms. Accordingly, the inventors reserve the right to add additional claims after filing the application to pursue such additional claim forms for other aspects of the communications systems.

## Claims

1. A method of controlling synchronization of messages to a client device, the method comprising:
receiving one or more messages comprising data for a client device (200M) associated with a user;
determining a category of each message;
determining an activity of the client device;
synchronizing the client device with data from the messages in response to the category of each message and the activity of the client device (200M);
wherein the synchronizing is **characterized by**:
placing each message into either an allow queue or a block queue depending on the category of each message and the activity of the client device in accordance with a rate control policy, wherein messages of a first category are placed into the allow queue, and messages of a second category are placed in either the allow queue or the block queue depending on the activity of the client device;
immediately synchronizing messages that have been placed in the allow queue; and
queuing messages that have been placed in the block queue without immediately initiating their synchronization.

2. The method of claim 1, wherein if the activity comprises a user action that includes one or more of generating a message at the client device (200M) and navigating a user interface (224) of the client device (200M), messages of the second category are placed in the allow queue.

3. The method of claim 1, comprising re-categorizing messages of one or more types of the second category in response to a communication event initiated at the client device (200M).

4. The method of claim 1, comprising re-categorizing messages of one or more types of the second category in response to a search of data of the server initiated at the client device (200M).

5. The method of claim 1, messages of the second category are placed in the allow queue in response to an activity including navigating to a first portion of a user interface (224) of the client device (200M), wherein the messages of the second category correspond to presence data of other users.

6. The method of claim 5, wherein the messages of the second category correspond to the other users having a first presence status.

7. The method of claim 5, wherein the first portion is a communications log page of the user interface (224).

8. The method of claim 5, wherein the first presence status is an active status, wherein the active status indicates the client device (200M) has communicated with the other user during a pre-specified period of time.

9. The method of claim 1, wherein messages of the second category are placed in the allow queue in response to an activity including navigating to a second portion of a user interface (224) of the client device (200M), wherein the messages of the second category correspond to presence data of other users.

10. The method of claim 9, wherein the messages of the second category correspond to other users having one or more of a first presence status and a second presence status.

11. The method of claim 9, wherein the second portion is a contacts list of the user interface (224).

12. The method of claim 9, wherein the first presence status is an active status and the second presence status is a standby status, wherein the active status indicates the user has communicated via the client device (200M) with the other user during a pre-specified period of time, wherein the standby status indicates the user has communicated via the client device with the other user outside the pre-specified period of time.

13. The method of claim 1, wherein messages of the second category are placed in the allow queue in response to a generated message of the first category being generated at the client device (200M), wherein the messages of the second category correspond to another user having one or more of a first presence status and a second presence status.

14. The method of claim 13, wherein the first presence status is an active status and the second presence status is a standby status, wherein the active status indicates the client device has communicated with the other user during a pre-specified period of time, wherein the standby status indicates the client device has communicated with the other user outside the pre-specified period of time.

15. The method of claim 1, wherein a first category is a high-priority message and a second category is a lower priority message relative to the first category, wherein the priority is assigned by the server.

16. The method of claim 1, wherein a first category is one or more of a text message, a telephone call notification message, a contact update message to update contact information, and a notification message of an event.

17. The method of claim 1, wherein a second category is a presence message, wherein the presence message includes information of presence and availability of at least one other user.

18. The method of claim 17, wherein the presence message includes one or more of a presence message corresponding to another user whom a user of the client device (200M) is actively monitoring and a presence message corresponding to another user whom a user of the client device excludes from active monitoring.

19. The method of claim 2, wherein synchronizing includes:
moving one or more messages from the blocked queue to the allow queue according to a presence status of another user that corresponds to the message; and
synchronizing messages in the allow queue.

20. The method of claim 19, wherein the user action includes navigating to a first portion of a user interface (224) of the client device (200M), wherein the presence status is an active status that indicates the client device has communicated with the other user during a pre-specified period of time.

21. The method of claim 19, wherein the user action includes navigating to a second portion of a user interface (224) of the client device (200M), wherein the presence status includes one or more of an active status and a standby status, wherein the active status indicates the client device has communicated with the other user during a pre-specified period of time and the standby status indicates the client device has communicated with the other user outside the pre-specified period of time.

22. The method of claim 19, wherein the user action includes generating a message of the first category at the client device (200M), wherein the presence status includes an active status and a standby status, wherein the active status indicates the client device has communicated with the other user during a pre-specified period of time and the standby status indicates the client device has communicated with the other user outside the pre-specified period of time.

23. The method of claim 1, wherein the activity comprises user actions that occur before the receiving.

24. The method of claim 1, wherein the activity comprises user actions that occur after the receiving.

25. The method of claim 1, wherein the category includes a plurality of message types.

26. A system (200) comprising a rate controller (202) coupled to at least one server and at least one communication network (232), the rate controller configured to perform a method according to any preceding claim.

27. A computer readable media including executable instructions which, when executed in a processing system, provides rate control by performing a method according to any of claims 1 to 25.

## Patentansprüche

1. Verfahren zum Steuern der Synchronisation von Nachrichten an eine Client-Vorrichtung, wobei das Verfahren Folgendes umfasst:
Empfangen einer oder mehrerer Nachrichten, die Daten für eine Client-Vorrichtung (200M) umfassen, die einem Benutzer zugeordnet ist;
Bestimmen einer Kategorie jeder Nachricht;
Bestimmen einer Aktivität der Client-Vorrichtung;
Synchronisieren der Client-Vorrichtung mit Daten aus den Nachrichten als Reaktion auf die Kategorie jeder Nachricht und die Aktivität der Client-Vorrichtung (200M);
wobei das Synchronisieren durch Folgendes gekennzeichnet ist:
Anordnen jeder Nachricht entweder in einer Zulassungswarteschlange oder einer Blockierwarteschlange abhängig von der Kategorie jeder Nachricht und der Aktivität der Client-Vorrichtung gemäß einer Ratenkontrollrichtlinie, wobei Nachrichten einer ersten Kategorie in der Zulassungswarteschlange angeordnet werden und Nachrichten einer zweiten Kategorie entweder in der Zulassungswarteschlange oder der Blockierwarteschlange angeordnet werden, abhängig von der Aktivität der Client-Vorrichtung;
sofortiges Synchronisieren von Nachrichten, die in der Zulassungswarteschlange angeordnet wurden; und
Anordnen von Nachrichten, die in der Blockierwarteschlange angeordnet wurden, in einer Warteschlange, ohne sofort ihre Synchronisation zu initiieren.

2. Verfahren nach Anspruch 1, wobei, wenn die Aktivität eine Benutzeraktion umfasst, die das Erzeugen einer Nachricht auf der Client-Vorrichtung (200M) und/oder das Navigieren einer Benutzerschnittstelle (224) der Client-Vorrichtung (200M) umfasst, Nachrichten der zweiten Kategorie in der Zulassungswarteschlange angeordnet werden.

3. Verfahren nach Anspruch 1, das das erneute Kategorisieren von Nachrichten von einem oder mehreren Typen der zweiten Kategorie als Reaktion auf ein Kommunikationsereignis umfasst, das an der Client-Vorrichtung (200M) initiiert wird.

4. Verfahren nach Anspruch 1, das das erneute Kategorisieren von Nachrichten von einem oder mehreren Typen der zweiten Kategorie als Reaktion auf eine Suche von Daten des Servers umfasst, die auf der Client-Vorrichtung (200M) initiiert wird.

5. Verfahren nach Anspruch 1, wobei Nachrichten der zweiten Kategorie in der Zulassungswarteschlange angeordnet werden, als Reaktion auf eine Aktivität, die das Navigieren zu einem ersten Abschnitt einer Benutzerschnittstelle (224) der Client-Vorrichtung (200M) umfasst, wobei die Nachrichten der zweiten Kategorie Anwesenheitsdaten von anderen Benutzern entsprechen.

6. Verfahren nach Anspruch 5, wobei die Nachrichten der zweiten Kategorie zu den anderen Benutzern gehören, die einen ersten Anwesenheitsstatus aufweisen.

7. Verfahren nach Anspruch 5, wobei der erste Abschnitt eine Kommunikationsprotokollseite der Benutzerschnittstelle (224) ist.

8. Verfahren nach Anspruch 5, wobei der erste Anwesenheitsstatus ein aktiver Status ist, wobei der aktive Status anzeigt, dass die Client-Vorrichtung (200M) mit dem anderen Benutzer während einer vorbestimmten Zeitdauer kommuniziert hat.

9. Verfahren nach Anspruch 1, wobei Nachrichten der zweiten Kategorie in der Zulassungswarteschlange angeordnet werden, als Reaktion auf eine Aktivität, die das Navigieren zu einem zweiten Abschnitt einer Benutzerschnittstelle (224) der Client-Vorrichtung (200M) umfasst, wobei die Nachrichten der zweiten Kategorie Anwesenheitsdaten von anderen Benutzern entsprechen.

10. Verfahren nach Anspruch 9, wobei die Nachrichten der zweiten Kategorie zu anderen Benutzern gehören, die einen ersten Anwesenheitsstatus und/oder einen zweiten Anwesenheitsstatus aufweisen.

11. Verfahren nach Anspruch 9, wobei der zweite Abschnitt eine Kontaktliste der Benutzerschnittstelle (224) ist.

12. Verfahren nach Anspruch 9, wobei der erste Anwesenheitsstatus ein aktiver Status ist und der zweite Anwesenheitsstatus eine Bereitschaftsstatus ist, wobei der aktive Status anzeigt, dass der Benutzer über die Client-Vorrichtung (200M) mit dem anderen Benutzer während einer vorbestimmten Zeitdauer kommuniziert hat, wobei der Bereitschaftsstatus anzeigt, dass der Benutzer über die Client-Vorrichtung mit dem anderen Benutzer außerhalb der vorbestimmten Zeitdauer kommuniziert hat.

13. Verfahren nach Anspruch 1, wobei Nachrichten der zweiten Kategorie in der Zulassungswarteschlange angeordnet werden als Reaktion auf eine erzeugte Nachricht der ersten Kategorie, die an der Client-Vorrichtung (200M) erzeugt wird, wobei die Nachrichten der zweiten Kategorie zu einem anderen Benutzer gehören, der über einen ersten Anwesenheitsstatus und/oder einen zweiten Anwesenheitsstatus verfügt.

14. Verfahren nach Anspruch 13, wobei der erste Anwesenheitsstatus ein aktiver Status ist und der zweite Anwesenheitsstatus eine Bereitschaftsstatus ist, wobei der aktive Status anzeigt, dass die Client-Vorrichtung mit dem anderen Benutzer während einer vorbestimmten Zeitdauer kommuniziert hat, wobei der Bereitschaftsstatus anzeigt, dass die Client-Vorrichtung mit dem anderen Benutzer außerhalb der vorbestimmten Zeitdauer kommuniziert hat.

15. Verfahren nach Anspruch 1, wobei eine erste Kategorie eine Nachricht mit hoher Priorität ist und eine zweite Kategorie eine Nachricht mit niedrigerer Priorität im Verhältnis zu der ersten Kategorie ist, wobei die Priorität durch den Server zugewiesen wird.

16. Verfahren nach Anspruch 1, wobei eine erste Kategorie eines oder mehrere von Folgendem ist: eine Textnachricht, eine Hinweisnachricht für einen Telefonanruf, eine Kontaktaktualisierungsnachricht zur Aktualisierung von Kontaktinformationen und eine Hinweisnachricht eines Ereignisses.

17. Verfahren nach Anspruch 1, wobei eine zweite Kategorie eine Anwesenheitsnachricht ist, wobei die Anwesenheitsnachricht Informationen über die Anwesenheit und Verfügbarkeit von mindestens einem anderen Benutzer umfasst.

18. Verfahren nach Anspruch 17, wobei die Anwesenheitsnachricht eines oder mehrere von Folgendem umfasst: eine Anwesenheitsnachricht, die einem anderen Benutzer entspricht, den ein Benutzer der Client-Vorrichtung (200M) aktiv überwacht, und eine Anwesenheitsnachricht, die einem anderen Benutzer entspricht, den ein Benutzer der Client-Vorrichtung von der aktiven Überwachung ausschließt.

19. Verfahren nach Anspruch 2, wobei das Synchronisieren Folgendes umfasst:
Bewegen einer oder mehrerer Nachrichten aus der blockierten Warteschlange in die Zulassungswarteschlange gemäß einem Anwesenheitsstatus eines anderen Benutzers, der der Nachricht entspricht; und
Synchronisieren von Nachrichten in der Zulassungswarteschlange.

20. Verfahren nach Anspruch 19, wobei die Benutzeraktion das Navigieren zu einem ersten Abschnitt einer Benutzerschnittstelle (224) der Client-Vorrichtung (200M) umfasst, wobei der Anwesenheitsstatus ein aktiver Status ist, der anzeigt, dass die Client-Vorrichtung mit dem anderen Benutzer während einer vorbestimmten Zeitdauer kommuniziert hat.

21. Verfahren nach Anspruch 19, wobei die Benutzeraktion das Navigieren zu einem zweiten Abschnitt einer Benutzerschnittstelle (224) der Client-Vorrichtung (200M) umfasst, wobei der Anwesenheitsstatus einen aktiven Status und/oder einen Bereitschaftsstatus umfasst, wobei der aktive Status anzeigt, dass die Client-Vorrichtung mit dem anderen Benutzer während einer vorbestimmten Zeitdauer kommuniziert hat, und der Bereitschaftsstatus anzeigt, dass die Client-Vorrichtung mit dem anderen Benutzer außerhalb der vorbestimmten Zeitdauer kommuniziert hat.

22. Verfahren nach Anspruch 19, wobei die Benutzeraktion das Erzeugen einer Nachricht der ersten Kategorie an der Client-Vorrichtung (200M) umfasst, wobei der Anwesenheitsstatus einen aktiven Status und einen Bereitschaftsstatus umfasst, wobei der aktive Status anzeigt, dass die Client-Vorrichtung mit dem anderen Benutzer während einer vorbestimmten Zeitdauer kommuniziert hat, und der Bereitschaftsstatus anzeigt, dass die Client-Vorrichtung mit dem anderen Benutzer außerhalb der vorbestimmten Zeitdauer kommuniziert hat.

23. Verfahren nach Anspruch 1, wobei die Aktivität Benutzeraktionen umfasst, die vor dem Empfang auftreten.

24. Verfahren nach Anspruch 1, wobei die Aktivität Benutzeraktionen umfasst, die nach dem Empfang auftreten.

25. Verfahren nach Anspruch 1, wobei die Kategorie eine Vielzahl von Nachrichtentypen umfasst.

26. System (200), das eine Ratenkontrollvorrichtung (202) umfasst, die mit mindestens einem Server und mindestens einem Kommunikationsnetzwerk (232) gekoppelt ist, wobei die Ratenkontrollvorrichtung dafür konfiguriert ist, ein Verfahren nach einem der vorhergehenden Ansprüche auszuführen.

27. Computerlesbares Medium, das ausführbare Anweisungen umfasst, die, wenn sie in einem Verarbeitungssystem ausgeführt werden, eine Ratenkontrolle durch Ausführung eines Verfahrens nach einem der Ansprüche 1 bis 25 bereitstellen.

## Revendications

1. Procédé de commande de synchronisation de messages adressés à un dispositif client, le procédé comprenant :
la réception d'un ou de plusieurs messages comprenant des données pour un dispositif client (200M) associé à un utilisateur ;
la détermination d'une catégorie de chaque message ;
la détermination d'une activité du dispositif client ;
la synchronisation du dispositif client avec les données des messages en réponse à la catégorie de chaque message et à l'activité du dispositif client (200M) ;
dans lequel la synchronisation est **caractérisée par** :
le placement de chaque message soit dans une file d'attente d'autorisation, soit dans une file d'attente d'interdiction en fonction de la catégorie de chaque message et de l'activité du dispositif client conformément à une stratégie de commande de débit, dans lequel les messages d'une première catégorie sont placés dans la file d'attente d'autorisation, et les messages d'une seconde catégorie sont placés soit dans la file d'attente d'autorisation, soit dans la file d'attente d'interdiction en fonction de l'activité du dispositif client ;
la synchronisation immédiate des messages qui ont été placés dans la file d'attente d'autorisation ; et
l'interrogation des messages qui ont été placés dans la file d'attente d'interdiction sans lancer immédiatement leur synchronisation.

2. Procédé selon la revendication 1, dans lequel si l'activité comprend une action d'utilisateur qui comporte l'une ou plusieurs de la génération d'un message au niveau du dispositif client (200M) et de la navigation sur une interface utilisateur (224) du dispositif client (200M), les messages de la seconde catégorie sont placés dans la file d'attente d'autorisation.

3. Procédé selon la revendication 1, comprenant la reclassification des messages d'un ou de plusieurs types de la seconde catégorie en réponse à un événement de communication lancé au niveau du dispositif client (200M).

4. Procédé selon la revendication 1, comprenant la reclassification des messages d'un ou de plusieurs types de la seconde catégorie en réponse à une recherche de données du serveur lancée au niveau du dispositif client (200M).

5. Procédé selon la revendication 1, dans lequel les messages de la seconde catégorie sont placés dans la file d'attente d'autorisation en réponse à une activité comportant la navigation sur une première partie d'une interface utilisateur (224) du dispositif client (200M), dans lequel les messages de la seconde catégorie correspondent à des données de présence d'autres utilisateurs.

6. Procédé selon la revendication 5, dans lequel les messages de la seconde catégorie correspondent aux autres utilisateurs ayant un premier état de présence.

7. Procédé selon la revendication 5, dans lequel la première partie est une page de consignation de communications de l'interface utilisateur (224).

8. Procédé selon la revendication 5, dans lequel le premier état de présence est un état actif, dans lequel l'état actif indique que le dispositif client (200M) a communiqué avec l'autre utilisateur durant une période de temps préspécifiée.

9. Procédé selon la revendication 1, dans lequel les messages de la seconde catégorie sont placés dans la file d'attente d'autorisation en réponse à une activité comportant la navigation sur une seconde partie d'une interface utilisateur (224) du dispositif client (200M), dans lequel les messages de la seconde catégorie correspondent à des données de présence d'autres utilisateurs.

10. Procédé selon la revendication 9, dans lequel les messages de la seconde catégorie correspondent à d'autres utilisateurs ayant un ou plusieurs d'un premier état de présence et d'un second état de présence.

11. Procédé selon la revendication 9, dans lequel la seconde partie est une liste de contacts de l'interface utilisateur (224).

12. Procédé selon la revendication 9, dans lequel le premier état de présence est un état actif et le second état de présence est un état de veille, dans lequel l'état actif indique que l'utilisateur a communiqué par l'intermédiaire du dispositif client (200M) avec l'autre utilisateur durant une période de temps préspécifiée, dans lequel l'état de veille indique que l'utilisateur a communiqué par l'intermédiaire du dispositif client avec l'autre utilisateur en dehors de la période de temps préspécifiée.

13. Procédé selon la revendication 1, dans lequel les messages de la seconde catégorie sont placés dans la file d'attente d'autorisation en réponse à un message généré de la première catégorie généré au niveau du dispositif client (200M), dans lequel les messages de la seconde catégorie correspondent à un autre utilisateur ayant un ou plusieurs d'un premier état de présence et d'un second état de présence.

14. Procédé selon la revendication 13, dans lequel le premier état de présence est un état actif et le second état de présence est un état de veille, dans lequel l'état actif indique que le dispositif client a communiqué avec l'autre utilisateur durant une période de temps préspécifiée, dans lequel l'état de veille indique que le dispositif client a communiqué avec l'autre utilisateur en dehors de la période de temps préspécifiée.

15. Procédé selon la revendication 1, dans lequel une première catégorie est un message de haute priorité et une seconde catégorie est un message de priorité inférieure par rapport à la première catégorie, dans lequel la priorité est assignée par le serveur.

16. Procédé selon la revendication 1, dans lequel une première catégorie est l'un ou plusieurs d'un message de texte, d'un message de notification d'appel téléphonique, d'un message d'actualisation de contact pour actualiser des informations de contact, et d'un message de notification d'un événement.

17. Procédé selon la revendication 1, dans lequel une seconde catégorie est un message de présence, dans lequel le message de présence comporte des informations de présence et de disponibilité d'au moins un autre utilisateur.

18. Procédé selon la revendication 17, dans lequel le message de présence comporte un ou plusieurs d'un message de présence correspondant à un autre utilisateur qu'un utilisateur du dispositif client (200M) contrôle activement et d'un message de présence correspondant à un autre utilisateur qu'un utilisateur du dispositif client ne contrôle pas activement.

19. Procédé selon la revendication 2, dans lequel la synchronisation comporte :
le déplacement d'un ou de plusieurs messages de la file d'attente d'interdiction dans la file d'attente d'autorisation conformément à un état de présence d'un autre utilisateur qui correspond au message ; et
la synchronisation des messages dans la file d'attente d'autorisation.

20. Procédé selon la revendication 19, dans lequel l'action d'utilisateur comporte la navigation sur une première partie d'une interface utilisateur (224) du dispositif client (200M), dans lequel l'état de présence est un état actif qui indique que le dispositif client a communiqué avec l'autre utilisateur durant une période de temps préspécifiée.

21. Procédé selon la revendication 19, dans lequel l'action d'utilisateur comporte la navigation sur une seconde partie d'une interface utilisateur (224) du dispositif client (200M), dans lequel l'état de présence comporte un ou plusieurs d'un état actif et d'un état de veille, dans lequel l'état actif indique que le dispositif client a communiqué avec l'autre utilisateur durant une période de temps préspécifiée et l'état de veille indique que le dispositif client a communiqué avec l'autre utilisateur en dehors de la période de temps préspécifiée.

22. Procédé selon la revendication 19, dans lequel l'action d'utilisateur comporte la génération d'un message de la première catégorie au niveau du dispositif client (200M), dans lequel l'état de présence comporte un état actif et un état de veille, dans lequel l'état actif indique que le dispositif client a communiqué avec l'autre utilisateur durant une période de temps préspécifiée et l'état de veille indique le dispositif client a communiqué avec l'autre utilisateur en dehors de la période de temps préspécifiée.

23. Procédé selon la revendication 1, dans lequel l'activité comprend des actions d'utilisateur qui se produisent avant la réception.

24. Procédé selon la revendication 1, dans lequel l'activité comprend des actions d'utilisateur qui se produisent après la réception.

25. Procédé selon la revendication 1, dans lequel la catégorie comporte une pluralité de types de message.

26. Système (200) comprenant un contrôleur de débit (202) couplé à au moins un serveur et au moins un réseau de communication (232), le contrôleur de débit étant configuré pour exécuter un procédé selon l'une quelconque des revendications précédentes.

27. Support lisible par ordinateur comportant des instructions exécutables qui, à leur exécution dans un système de traitement, assurent une commande de débit en exécutant un procédé selon l'une quelconque des revendications 1 à 25.
